# EUROPEAN PATENT APPLICATION

(11) **EP 2 073 140 A1**
(43) Date of publication of application: **24.06.2009**
(21) Application number: 07123886.9
(22) Date of filing: 20.12.2007
(51) Int. Cl.: G06F 21/20, G06F 21/24

(54) **A method and system of conducting a communication**

(71) Applicant: Ifrah, Meyer, 78350 Les Loges-en-Josas (FR)
(72) Inventor: Ifrah, Meyer, 78350 Les Loges-en-Josas (FR)
(74) Representative: Gabriel, Franck

(57) **Abstract**

A method of conducting a communication over a communication network, the method comprising:
- registering a user of a communication device as a member user MD of a securing entity VM, the securing entity VM authenticating personal data of the member user MD via a trusted third party entity TTP,
- sorting the personal data of the member user according to categories comprising identifying data, non-identifying data and semi-identifying data, non-identifying data and semi-identifying data being correlated to identifying data by a sworn person of the trusted third party entity TTP, only at least one of non-identifying data and semi-identifying data being requestable by any client entity YMD, PAWS, PCWS, SOS during a communication,
- archiving identifying data in a trusted third party entity TTP,
- electronically storing at least a part of semi-identifying data in a trusted third party entity database TTPDB, and non-identifying data in a securing entity database VMDB.

## Description

### FIELD OF THE INVENTION

An aspect of the invention relates to methods and systems for communicating over open communications systems or networks. More particularly, the invention relates to methods and systems of conducting a communication between parties over an open communications or computer network, such as an internet or the Internet.

### BACKGROUND OF THE INVENTION

A communication network such as the Internet is essential for emails exchanges, information search, education, online purchase and sale of services and products. The World Wide Web users comprise various generations of people with different needs in terms of ergonomics, services and behaviors. One of these generations is composed of active adults and seniors whose needs of the Internet are first practical (both private and professional, family and relational, social or cultural) and then entertainment. The users of this last generation are particularly embarrassed when using the Internet because of the followings drawbacks:
- they do not know, before any registration in a website, before filling any form requesting personal data, what use (e.g. commercial, marketing, mercantile, political, fraudulent, illicit) could be made of their personal data, without their knowledge;
- they do not want to take risks of being harassed, aggressed, violated in their private life, by revealing their identity to other World Wide Web users who present themselves under pseudonyms or unreliable description;
- they do not want to let their kids taking any risk of online meetings with detrimental or dramatic consequences;
- they hesitate or refuse to purchase anything online when it comes to type their credit card information because they do not trust the online payment system involved; and
- they find use of websites difficult because the ergonomics of websites may have complex functionalities, and a website visit often follows non-organized and non-logical approach.

### SUMMARY OF THE INVENTION

It is an object of the invention to propose a method and system of conducting a communication between parties over a communications network that overcomes at least one of the drawbacks of the prior art methods and systems.

According to an aspect, the invention relates to a method of conducting a communication over a communication network, the method comprising:
- registering a user of a communication device as a member user of a securing entity, the securing entity authenticating personal data of the member user via a trusted third party entity,
- sorting the personal data of the member user according to categories comprising identifying data, non-identifying data and semi-identifying data, non-identifying data and semi-identifying data being correlated to identifying data by a sworn person of the trusted third party entity, only at least one of non-identifying data and semi-identifying data being requestable by any client entity during a communication,
- archiving identifying data in a trusted third party entity,
- electronically storing semi-identifying data in a trusted third party entity database, and non-identifying data in a securing entity database.

The method may further comprise responding to a request for at least one of non-identifying data and semi-identifying data made by the client entity to the securing entity, wherein responding to the request is subject to an authorization given by the member user.

The registration of the user of the communication device may be a provisional registration of the user of the communication device before the securing entity and the trusted third party entity, the provisional registration comprising:
- connecting the communication device of the user to a securing entity server by using a network browser, downloading and installing a securing entity member software on said communication device, the securing entity member software initiating a connection between the communication device and a server of the trusted third party entity, and inviting the user of the communication device to input an electronic transmission address of the user, the trusted third party server sending a control message to the user of the communication device, the content of the control message comprising a control code,
- requesting the user to input the control code in an appropriate field of a trusted third party registration window, and to provide non-identifying data,
- sending non-identifying data from the trusted third party server to the securing entity server, and storing the non-identifying data in a securing entity server database,
- displaying a member identification and a member password in a securing entity registration window,
- inviting the user of the communication device to input said member identification and member password in a securing entity connection window, and
- registering the user as a member user should an input of the member identification and member password be successful.

The registration of the user of the communication device may be a first level registration of the member user of the communication device before the securing entity and the trusted third party entity, the first level registration comprising:
- initiating the securing entity member software on the communication device of the member user,
- inviting the member user to choose a mode of the first level registration should an input of the member identification and member password be successful, the mode of the first level registration being selected from the group consisting of a first registration mode and a second registration mode in a trusted third party registration window,
- inviting the member user to send a copy of documents showing personal data by courier or postal mail delivery to a trusted third parties entity office address should the first registration mode be chosen,
- inviting the member user to send a message comprising an attached file containing scanned documents showing personal data to a trusted third parties server, should the second registration mode be chosen,
- archiving the identifying data at trusted third parties entity office,
- sending non-identifying data from the trusted third party server to the securing entity server, and storing non-identifying data in the securing entity server database, and
- registering the user as a first level member user.

The securing entity server may deliver a securing entity public identifier which is a temporary identifier to the member user upon registering the user of the communication device.

The registration of the user of the communication device may be a second level of registration of the member user of the communication device before the securing entity and the trusted third party entity, the second level registration comprising:
- initiating the securing entity member software on the communication device of the member user,
- inviting the user to input his personal user known third party identification code in a securing entity connection window should an input of the member identification and member password be successful, the user known third party being selected from a group consisting of a bank entity, a financial entity and an insurance entity,
- checking that a user known third party corresponding to the personal user known third party identification code is a partner entity of the securing entity,
- inviting the member user to connect to a website of the partner user known third party entity and access to his account,
- creating an association between the website of the partner user known third party entity and the securing entity by typing the user securing entity public identifier,
- requesting the member user authorization to transmit non-identifying data from the partner user known third party entity to the securing entity server,
- sending semi-identifying and non-identifying data from the partner user known third party entity to the trusted third party server via a packet server, and storing at least a part of the semi-identifying in the trusted third party server databases, and
- sending non-identifying data from the trusted third party server to the securing entity server, and storing said non-identifying data in the securing entity server database.

The registration of the user of the communication device may be a third level of registration of the member user of the communication device before the securing entity and the trusted third party entity, the third level registration comprising:
- initiating the securing entity member software on the communication device of the member user,
- initiating a connection between the communication device of the member user and the trusted third party entity server, should an input of the member identification and member password be successful,
- inviting the member user of the communication device to input semi-identifying and non-identifying personal data in an appropriate field of a trusted third party registration window,
- inviting the member user of the communication device to visit the trusted third parties entity office with genuine documents comprising identifying, semi-identifying and non-identifying personal data by indicating an address of the trusted third parties entity office,
- controlling a conformity of the personal data of the genuine documents with the input semi-identifying and non-identifying personal data, and correlating identifying data to semi-identifying data and non-identifying data, controlling conformity and correlating identifying data being performed by a sworn person of the trusted third parties entity,
- archiving identifying data in the trusted third party entity office, electronically storing semi-identifying data in the trusted third party entity database,
- sending non-identifying data to the securing entity server, and electronically storing non-identifying data in the securing entity database, and
- registering the member user as a third level member user.

The registration of the user of the communication device may further comprise:
- collecting biometric data of the member user, and giving biometric tools to the member user, and
- registering the member user as a fourth level member user.

Registering the user of the communication device may further comprise:
- inviting the user to transmit credit card information to the trusted third party server,
- electronically storing the credit card information as semi-identifying data in the trusted third party entity database, and
- transmitting the credit card information from the trusted third party server to a securing entity bank under the control and the agreement of the member user at the time of a transaction.

The at least a part of semi-identifying data may be stored in split databases of the trusted third party entity, the semi-identifying data being reconstituted dynamically when needed at the time of a transaction.

Optionally, at least another part of semi-identifying data may be electronically stored in the securing entity database.

The exchanges of data between a partner commercial entity or a partner bank entity and the securing entity server may be handled via a packet server.

The method of conducting a communication according to the invention may be used in a confidential and anonymous conference over a communication network, the method comprising:
- initiating at least a first and a second securing entity member software on a first and second communication device of a first and a second member user, respectively,
- initiating a connection between the respective communication device of the respective member user and the securing entity server should an input of each member identification and member password be successful,
- mutually authenticating each user with respect to the other by exchanging their respective public identifier, and
- transferring messages between the member users through the securing entity server.

The method of conducting a communication according to the invention may be used in an identity verification application over a communication network, the method comprising:
- initiating a first and a second securing entity member software on a first and second communication device of a first and a second member user, respectively,
- initiating a connection between the respective communication device of the respective member user and the securing entity server should an input of each member identification and member password be successful,
- sending a request from the first member user of the first communication device to the second member user of the second communication device, the request comprising an indication of the non-identifying personal data of the second member user that the first member user wishes to confirm,
- sending a decision, the decision being selected from a group consisting of accepting totally the request, accepting partially the request and refusing the request, from the second member user of the second communication device to the securing entity server, and
- transmitting the decision of the second member user together with the data he has accepted to transfer from the securing entity server to the first member user.

The method of conducting a communication according to the invention may be used in a qualification verification application over a communication network, the method comprising:
- initiating a connection between the member user communication device and the securing entity server should an input of the member identification and member password be successful,
- connecting the member user communication device to a website of a partner commercial entity offering adult restricted services and inviting the member user communication device to type his securing entity public identifier,
- requesting a qualification of the member user personal data from the website of the partner commercial entity offering adult restricted services to the securing entity server via a packet server,
- requesting authorization of the member user to transmit the non-identifying parts of his personal data related to his qualification from the securing entity server to the website of the partner commercial entity offering adult restricted services via the packet server,
- transferring the qualification should a positive acceptance of the member user occur, and
- informing the member user about the authorization to access to the service restricted to adults offered by the partner commercial entity.

The method of conducting a communication according to the invention may be used in a payment application over a communication network, the method comprising:
- connecting the member user communication device to a website of a partner commercial website offering an online service upon payment of a transaction amount,
- inviting the member user communication device to type his securing entity public identifier,
- sending a first request asking for the authorization of the member user to pay through a securing entity payment service from the partner commercial website to the securing entity server via a packet server,
- transmitting a second request asking for payment acceptation from the partner commercial website to the securing entity bank server via a packet server should a positive acceptance of the first authorization request by the member user via the securing entity server occur,
- transmitting a third request asking for authorization to send credit card information of the member user from the trusted third party server to the securing entity bank server via the packet server should a positive acceptance of the second authorization request by the member user via the securing entity server occur,
- dynamically reconstituting the credit card information of the member user by the trusted third party server based on data split in at least the trusted third party databases should a positive acceptance of the third authorization request by the member user via the securing entity server occur,
- sending the credit card information from the trusted third party server to the securing entity bank via the packet server,
- transmitting an acceptation of payment from the securing entity bank server to the partner commercial website,
- transferring the transaction amount from the securing entity bank server to the bank of the partner commercial website, and
- transferring the transaction amount from the member user's bank server to the securing entity bank server.

The method of conducting a communication according to the invention may be used in a survey application over a communication network, the method comprising:
- sending a request for a survey from a survey organization server to the securing entity server via a packet server, the request indicating member users' profiles and a number of member users, the member users' profile being only based on non-identifying personal data,
- sending a feasibility confirmation from the securing entity server to the survey organization server,
- creating and sending a questionnaire from the survey organization server to the securing entity server,
- inviting selected communication device member users to participate to the survey, the invitation being initiated when a member user establishes a connection with the securing entity server,
- submitting the questionnaire to the member user upon acceptation to participate to the survey by the member user, and repeating submission until a sample of member user in conformity with the request made by the partner survey organization is achieved, and
- transmitting survey results from the securing entity server to the partner survey organization.

According to a further aspect, the invention relates to a system of conducting a communication over a communication network between a communication device of a member user, a trusted third party entity and a securing entity, the system being characterized in that:
- the communication device of the member user comprises a member user software for accessing to services offered by the securing entity server,
- the trusted third party entity comprises a trusted third party server, at least one trusted third party database, the trusted third party entity server comprising a trusted third party software to administrate personal data belonging to the member user sorted according to categories comprising identifying data, non-identifying data and semi-identifying data, non-identifying data and semi-identifying data being correlated to identifying data by a sworn person of the trusted third party entity, only data selected from a group consisting of non-identifying data and semi-identifying data being requestable by any client entity during a communication, and to electronically store the semi-identifying data in the database, the identifying data being archived in an office of the trusted third party entity and the semi-identifying data being electronically stored in the trusted third party entity database, and
- the securing entity comprises a securing entity server and a securing entity database, the securing entity server comprising a securing entity software to register the user of the communication device as a member user of the communication device before the securing entity, to electronically store non-identifying data in the securing entity database, and to authenticate personal data belonging to the member user via the trusted third party entity, and to respond to a request for data selected from the group consisting of non-identifying data and semi-identifying data made by the client entity to the securing entity under an authorization given by the member user.

The client entity may be selected from a group consisting of a bank server, a commercial server, and other member user of a communication device.

A server selected from a group consisting of a bank server and a commercial server may be further coupled to at least one of the securing entity server and the trusted third party server through a packet server, the server selected from the group consisting of the bank server and the commercial server comprising a first interface software for controlling connection and routing requests and messages between the server selected from the group consisting of the bank server and the commercial server and the at least one of the securing entity server and the trusted third party server through the packet server.

The bank server may be coupled to the commercial server through another packet server, at least one of the bank server and the commercial server comprising a second interface module for controlling connection and routing requests and messages between the bank server and the commercial server through the packet server.

According to still a further aspect, the invention relates to a computer program product for a system of conducting a communication over a communication network, the system comprising a communication device of a user, a trusted third party entity server, a securing entity server and a client entity that are connectable to each other over the communication network, the computer program product comprising a set of instructions that, when loaded into a program memory of and run by the communication device of the user, the trusted third party entity server, the securing entity server and the client entity, causes the system to carry out the steps of:
- receiving, from a securing entity, registration information of a user of a communication device, the registration information being for the user to become a member user, the registration information including personal data authenticated by the securing entity through the trusted third party entity, and
- sorting the personal data of the member user according to categories comprising identifying data, non-identifying data and semi-identifying data, non-identifying data and semi-identifying data being correlated to identifying data by a sworn person of the trusted third party entity, only at least one of non-identifying data and semi-identifying data being requestable by any client entity during a least one of a transaction and a communication, identifying data being archived in an office of a trusted third party entity, and
- electronically storing semi-identifying data in a trusted third party entity database, and non-identifying data in a securing entity database.

The set of instructions of the computer program product may further cause the system to carry out the steps of responding to a request for at least one of non-identifying data and semi-identifying data made by the client entity to the securing entity, wherein responding to the request is subject to an authorization given by the member user.

Thus, one aspect of the invention is to propose a sorting approach of the personal data in three categories. Each category of data is defined and treated specifically regarding their contents, the way they are stored or not, the format of storage, the location where they are stored, the way they may be retrieved. There is no confusion between the different categories of data stored in different databases of different entities. In particular, on the one hand, the member user may only give one time his personal data to the trusted third party entity, and, on the other hand, the identifying data of the member user does not need to be stored and/or may never be stored in any electronic database, whether in the trusted third party server or in the securing entity server. The member users do not need to further input their personal data in the databases of any partner entity. The securing entity plays the role of a "quarter of confidentiality". Furthermore, a reliability of the non-identifying data is obtained by the registration levels increasing from the provisional level of registration to the fourth level of registration.

Further, another aspect of the invention is to propose to the member user to manage a service process and a control process held in parallel. Thus, a permanent and effective control of the use which is made of a member user's personal data can exist, enabling protecting the member user anonymity, confidentiality and intimacy and enabling the member user to act responsibly when effecting a communication or a transaction. In particular, a partner entity can request non-identifying personal data of a member user through the securing entity but only with the consent of the member user. The consent is sought each time his personal data are requested. Thus, the member user is the only one who agrees to whom his personal data may be transmitted and what personal data may be transmitted.

A further aspect of the invention is also to enable a great number of communication network users to quickly become members of the security entity, a great number of online organizations and companies to quickly become partners of the security entity, and a great number of sworn persons to quickly become a trusted third party of the security entity. As a consequence, the member users, the partner entities, the trusted third parties and the securing entity form a community and define a secured communication network parallel to the World Wide Web. The parallel secured communication network is adjacent to the World Wide Web and initiated by software provided by the securing entity, which may be without the use of a typical Internet browser.

Still a further aspect of the invention enables solving the paradox of knowing what a member user is without knowing who the member user is.

These and other aspects of the invention will be apparent from and elucidated with reference to the embodiments described hereinafter.

### BRIEF DESCRIPTION OF THE DRAWINGS

The present invention is illustrated by way of example and not limited to the accompanying figures, in which like references indicate similar elements:
FIGS. 1, 2A and 2B schematically illustrate a first part of a registration process of a member device according to an example embodiment of the invention;
FIGS. 3 and 4 schematically illustrate a second part of the registration process of the member device according to a first embodiment of the invention;
FIGS. 5, 6A and 6B schematically illustrate a second part of the registration process of the member device according to a second embodiment of the invention;
FIGS. 7 and 8 schematically illustrate a second part of the registration process of the member device according to a third and a fourth embodiment of the invention;
FIGS. 9, 10A and 10B schematically illustrate an identity verification application and a conference application between two members' devices according to another aspect of the invention;
FIGS. 11, 12A and 12B schematically illustrate an identity verification application between a member device and a client website according to another aspect of the invention;
FIGS. 13, 14A, 14B and 14C schematically illustrate an online payment application between a member device, a client website and bank servers according to another aspect of the invention;
FIGS. 15 and 16 schematically illustrate a survey application according to another aspect of the invention;
FIG. 17A and 17B is a flowchart illustrating the operation and functionalities of an example embodiment of the member user software;
FIG. 18 is a flowchart illustrating the operation and functionalities of an example embodiment of the trusted third party software; and
FIG. 19 is a flowchart illustrating the operation and functionalities of an example embodiment of the client entity interface software.

### DETAILED DESCRIPTION OF THE INVENTION

In the description of the invention, the following terminology will be used.

There are three categories of personal data related to a member user. Each personal data item is treated in a specific way according to the three categories to which the item belongs.

A first category regroups the nominative data or identifying data. As examples, identifying data may be the last name, first name, address, the whole identification card number, passport number, driver license number, social security card number or any other identification card number, etc.... Thus, the identifying data clearly enables knowing who the member user is. These data, once transmitted, reveal the exact identity of a member user and remove its anonymity. According to an aspect of the invention, the identifying data of the member users may never be stored in any database.

A second category regroups the semi-nominative data or semi-identifying data. As examples, semi-identifying data may be the email addresses, telephone numbers, credit card related information, etc... The semi-identifying data are used for some exchanges between some entities of the system of the invention and its member users, for transactions confirmations and for double controls. As the semi-identifying data could potentially reveal who is the member user, they are split, encrypted and stored in different databases. As a first alternative, the non-identifying data may be stored in the trusted third party server databases TTPDB. As a second alternative a part of the non-identifying data may be stored in the trusted third party server databases TTPDB, while another part of the non-identifying data may be stored in the securing entity server databases VMDB. Typically, the possession of one database doesn't permit to reconstitute the semi-identifying data and will be of no use to anyone that possesses one database. According to another aspect of the invention, the semi-identifying data may be reconstituted dynamically, which may be only when needed and/or only temporarily.

A third category regroups the non-nominative data or non-identifying data. As examples, non-identifying data may be the gender (male/female), age (age, month and year of birth, age bracket, major/minor), location (country, state, region, province, zone, department), or a portion of any identification card number, etc.... The non-identifying data are preferably neuter data that preferably cannot, alone, reveal who is exactly the member user. The non-identifying data, once transmitted, are not sufficient to reveal the exact identity of a member user and don't violate his anonymity. The non-identifying data are the only data stored in the securing entity databases VMDB. The possession of this database will be of little use because the non-identifying data are neuter, and because there is no relationship between the non-identifying data and the identifying or semi-identifying data of a member user. In addition, for improved security and in order to discourage any "stepping", some non-identifying data such as, for example, the day of birthday, or the town of the member user's address are stored separately in at least the trusted third party server databases TTPDB.

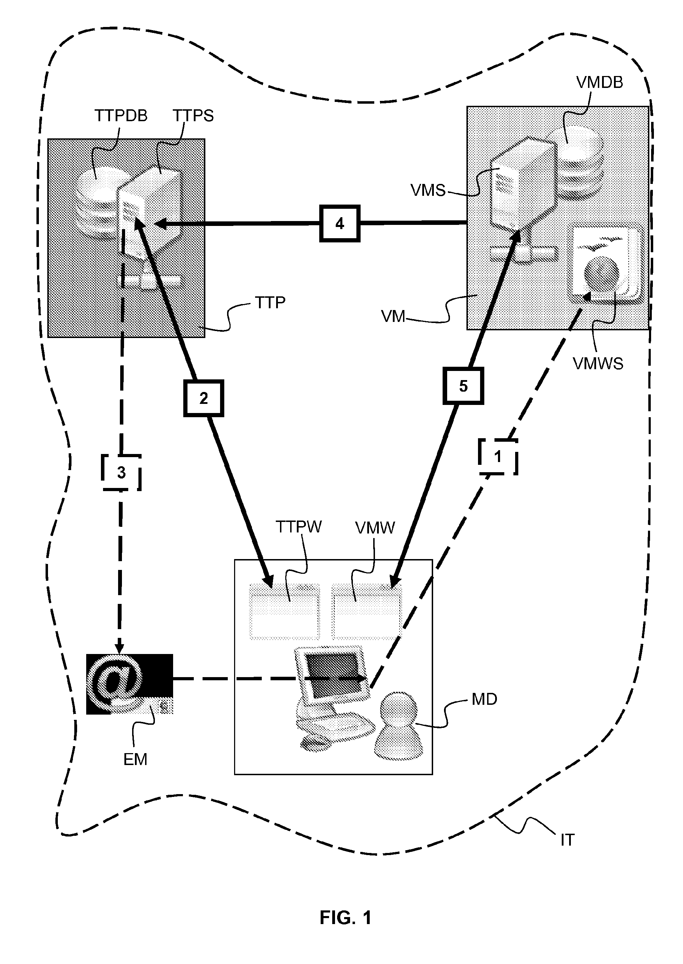

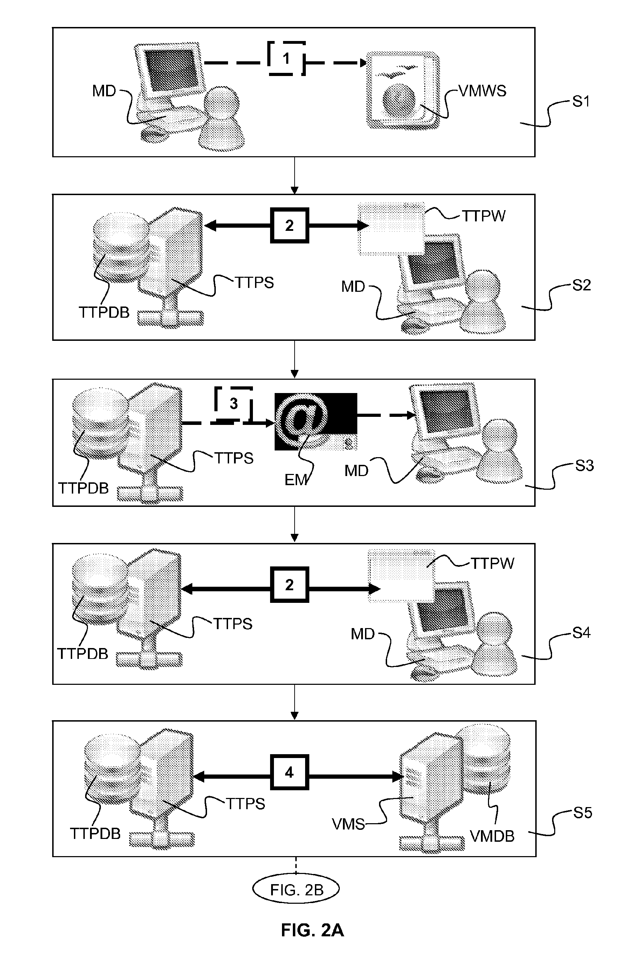

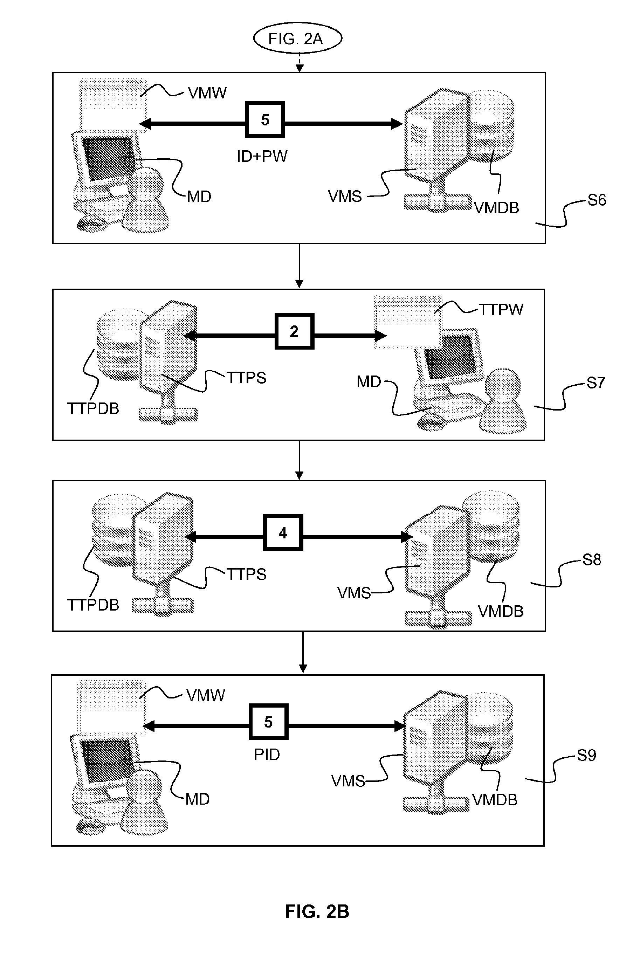

FIGS. 1, 2A and 2B schematically illustrate a first part of a registration process of a communication device according to an example embodiment of the invention. A purpose of the first part of the registration process is to provisionally register a user of a communication device MD before a securing entity VM and a trusted third party entity TTP that are connectable to each other over a communication network IT. At the end of the first part of a registration process, the user of the communication device becomes a provisional member of the securing entity.

In an example embodiment, a provisional registration process may comprise some or all of the following steps.

In a first step S1, a connection of a first type 1 is established. The connection of the first type 1 is a connection according to an internet communication protocol between a communication device MD of a World Wide Web user and a securing entity website VMWS. Typically, the connection is established by means of web browser (e.g. Internet Explorer^{™}, Firefox^{™}, etc...) that a user operates on his communication device MD. The internet communication protocol may be either the hypertext transfer protocol (http) or the secure hypertext transfer protocol (https). More precisely, the user of the communication device MD who wants to become a provisional member of the securing entity opens his browser and connects to the securing entity website VMWS (e.g. www.verimore.com). After, the user has clicked on a link in order to become a member of the securing entity, he is invited to download and install a securing entity member software. When the installation is finished, a securing entity connection window VMW appears. The securing entity connection window VMW invites the user of the communication device MD who is not yet registered as a securing entity member to further click on a registration link.

In a second step S2, a connection of a second type 2 is established. The connection of the second type 2 is a direct connection, namely a connection which doesn't need to use a web browser and an internet communication protocol like http or https. The connection of the second type 2 is a connection initiated from the securing entity member software installed on the communication device MD. The connection of the second type 2 handles all the exchanges between the communication device MD and a server of the trusted third party entity TTPS. More precisely, the securing entity member software initiates a connection of the second type 2 between the communication device MD and the server of the trusted third party entity TTPS. A trusted third party registration window TTPW appears and invites the user of the communication device MD to input his email address. The email address of the user is a semi-identifying data that may be split, each parts being stored in different trusted third party databases TTPDB, or one part in the trusted third party databases TTPDB and another part in the securing entity databases VMDB. The email address of the user may not be stored in the securing entity database VMDB.

In a third step S3, a connection of a third type 3 is established. The connection of the third type 3 is a connection enabling a trusted third party server TTPS to send an email EM to the user of the communication device MD. This type of connection may be used for sending any email to a member user. More precisely, in this step, the content of the email comprises a control code. The email address of the user which is a semi-identifying data that may not be stored in a unique trusted third party database but rather dynamically reconstituted by a software running on the trusted third party server TTPS based on different parts stored in different trusted third party databases TTPDB, or one part in the trusted third party databases TTPDB and another part in the securing entity databases VMDB.

In a fourth step S4, the connection of the second type 2 already established in the second step (S2) enables the user of the communication device MD inputting the control code in an appropriate field of the trusted third party registration window TTPW.

In a fifth step S5, a connection of a fourth type 4 is established. The connection of the fourth type 4 is a direct connection, namely a connection which doesn't need to use a web browser and an internet communication protocol like http or https. The connection of the fourth type 4 handles exchanges between the trusted third party server TTPS and the securing entity server VMS. The information which is exchanged between the trusted third party server TTPS and the securing entity server VMS respects the rules according to the category of personal data involved. The non-identifying data are sent to the securing entity server VMS and stored in the securing entity server database VMDB.

In a sixth step S6, a connection of a fifth type 5 is established. The connection of the fifth type 5 is a direct connection, namely a connection which doesn't need to use a web browser and an internet communication protocol like http or https. The connection of the fifth type 5 handles exchanges between the user of the communication device MD and the securing entity server VMS. More precisely, a securing entity registration window VMW appears and displays a member identification ID and a member password PW of the user of the communication device MD. Then, the securing entity connection window reappears and the user of the communication device MD is invited to input his member identification and a member password.

In a seventh step S7, the connection of the second type 2 already established in the second step (S2) enables the user of the communication device MD inputting other information in another appropriate field of the trusted third party registration window TTPW. For example, the user inputs his gender (male/female) or birthday date, etc.... This step further completes the registration of the user of the communication device MD as a member of the securing entity. The user will now be referred as a member user or as a member communication device MD.

In a eighth step S8, the connection of the fourth type 4 already established in the fifth step (S5) is used to exchange information between the trusted third party server TTPS and securing entity server VMS. Once again, the information which is exchanged between the trusted third party server TTPS and the securing entity server VMS respects the rules according to the category of personal data involved.

In a ninth step S9, the connection of the fifth type 5 already established in the sixth step (S6) is used to display to the member user MD a securing entity window VMW now showing applications or services offered by the securing entity. The securing entity window VMW enhanced with the offered applications will now systematically appear to the member user each time he starts the securing entity member software and makes a successful login using his identification and password. The securing entity window VMW allows the member user to access all applications or services according to his registration level. The registration level will be explained in more details hereinafter. The securing entity window VMW further allows the member user to obtain a securing entity public identifier PID. The securing entity public identifier is a temporary identifier that may be used for particular authentications needed in connection with services that will be explained in more details hereinafter.

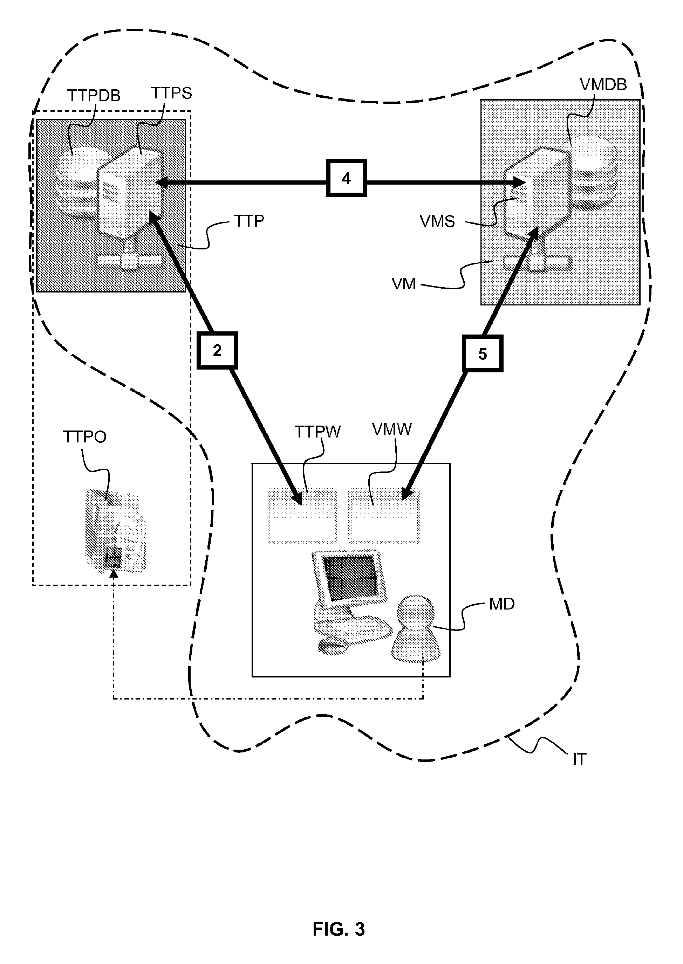

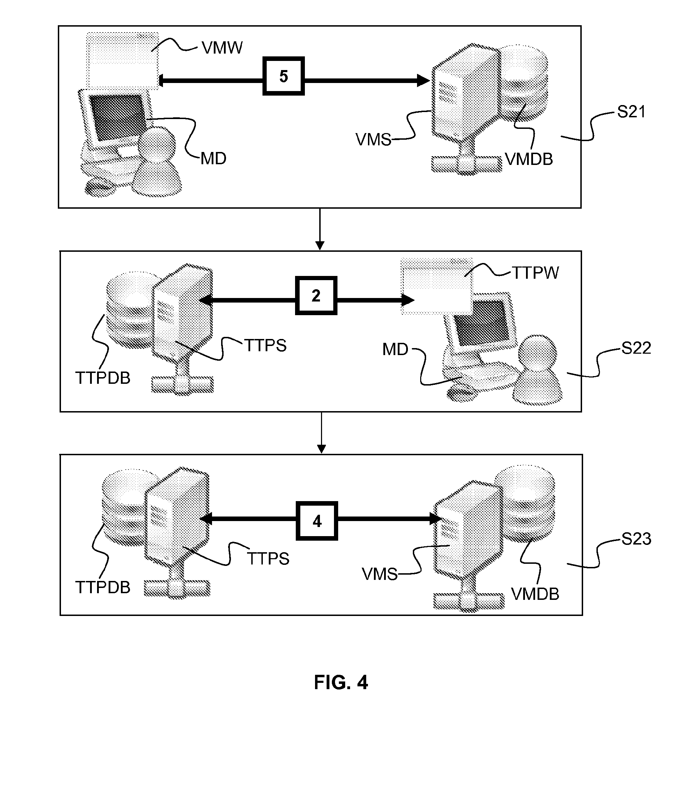

FIGS. 3 and 4 schematically illustrate a second part of the registration process of the member communication device according to a first embodiment of the invention. The first embodiment of the invention corresponds to a first level of registration before the trusted third party entity.

In a first step S21, a connection of the fifth type 5 is established between the member user of the communication device MD and the securing entity server VMS. More precisely, the member user starts the securing entity member software. The securing entity connection window VMW appears. After a successful input of his member identification and member password, the member user chooses the corresponding registration service in order to become a level one member user.

In a second step S22, a connection of the second type 2 is established between the member user of the communication device MD and the trusted third party server TTPS. More precisely, a trusted third party registration window TTPW appears. The member user of the communication device MD is invited to choose the mode of the first level of registration. Two registration modes may be provided. In a first registration mode, the member user is invited to send a "physical" copy of his documents, for example by a courier or postal mail delivery, to the trusted third parties entity office TTPO. The address for sending the documents is indicated to the member user. In a second registration mode, the member user is invited to send a secure electronic transmission to the trusted third parties server TTPS. The electronic transmission comprises an attached file containing his scanned documents. The documents justify the personal data of the member user. The documents comprise identifying data that are archived at trusted third parties entity office TTPO. The documents are archived as paper copies of the official documents sent by the member user to the trusted third parties entity, or as a scanned image files of the official documents sent by the member user to the trusted third parties entity. The paper copies or scanned image files are archived just as they are. Consequently, the identifying data that they contain are not stored in any electronic database. The semi-identifying data are stored in the trusted third party database TTPDB, eventually as split parts in different trusted third party databases.

In a third step S23, a connection of the fourth type 4 is established between the trusted third party server TTPS and the securing entity server VMS. As soon as either the trusted third parties entity office TTPO receives the mail enclosing the documents or the trusted third parties server TTPS receives the secure electronic transmission with the attached file, connection of the fourth type 4 is established in order to inform the securing entity server. Further, the non-identifying data parts of the personal data are sent by the trusted third party server TTPS to the securing entity server VMS. Thus, said information exchange respects the rules hereinbefore defined according to the category of personal data involved. The non-identifying data send to the securing entity server VMS are stored in the securing entity server database VMDB.

The user member of the communication device MD is now registered as a level one member user. Now, next time the member user will start the securing entity member software, a connection of the fifth type 5 will be initiated and he will be notified that his registration level has changed from a provisional member user to a level one member user.

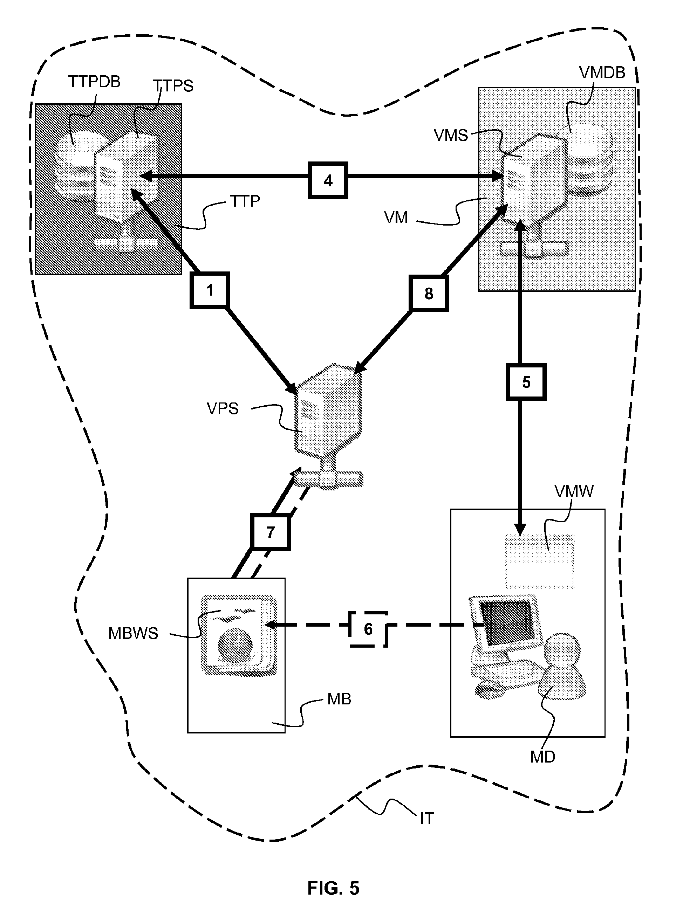

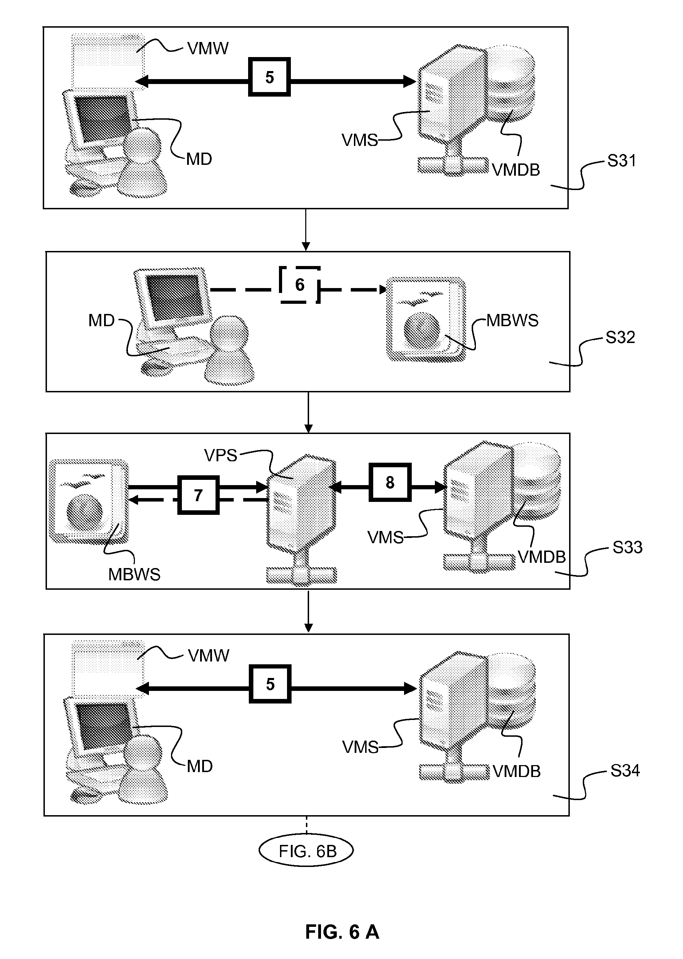

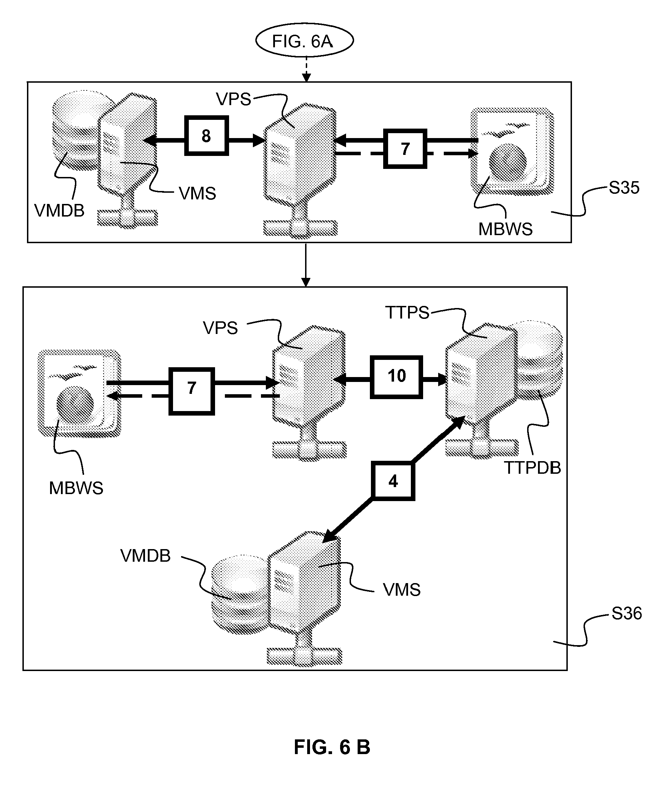

FIGS. 5, 6A and 6B schematically illustrate a second part of the registration process of the member communication device according to a second embodiment of the invention. The second embodiment of the invention corresponds to a second level of registration before the trusted third party entity.

In a first step S31, a connection of the fifth type 5 is established between the member user of the communication device MD and the securing entity server VMS. More precisely, the member user starts the securing entity member software. The securing entity connection window VMW appears. After a successful input of his member identification and member password, the member user chooses the corresponding registration service in order to become a level two member user. Then, the securing entity connection window VMW invites the member user to input his bank code. The bank code identifies the bank such that the securing entity server VMS may check that the bank is a client or partner entity of the securing entity. If said bank is a client or partner entity of the securing entity, the member user must complete the second level of registration within a determined time frame, for example in thirty minutes. Alternatively, this step may be avoided if the partner bank entity proposes to its client to become a securing entity member through the bank website.

In a second step S32, a connection of the sixth type 6 is established between the member user of the communication device MD and the partner bank entity MB. The partner bank entity is the e-bank or electronic bank of the member user. The connection of the sixth type 6 may be a connection according to an network or internet communication protocol between a communication device MD of a member user and a website of the partner bank entity MBWS. Typically, the connection is established by means of a network browser such as a web browser (e.g. Internet Explorer^{™}, Firefox^{™}, etc...) that the member user operates on his communication device MD. The network or internet communication protocol may be, for example, either the hypertext transfer protocol (http) or the secure hypertext transfer protocol (https). The member user connects to the server or website of the partner bank entity MBWS and accesses to his account as usual. The member user will find an association link in order to create an association with the securing entity. For example, he may be invited to type his securing entity public identifier.

In a third step S33, a connection of the seventh type 7 and a connection of the eighth type 8 is established. The connection of the seventh type 7 is a direct connection, namely a connection which doesn't need to use a web browser, combined to a secure communication protocol. For example, the secure communication protocol may be based on a secure socket layer and a securing entity proprietary encryption method. It handles exchanges between the website of the partner bank entity MBWS and a packet server VPS. This connection is initiated by an application programming interface delivered by the securing entity to the partner bank entity. The connection of the eighth type 8 is also a direct connection, namely a connection which doesn't need to use a web browser and an internet communication protocol like http or https. It handles exchanges between the packet server VPS and the securing entity server VMS. This connection is also initiated by the above mentioned application programming interface. These connections are used to send a confirmation alert request from the website of the partner bank entity MBWS to the securing entity server VMS.

In the foregoing, the packet server VPS is a packet server of the securing entity. The packet server is positioned between the securing entity server or the trusted third party server and any other server or website (a partner bank server, or a partner commercial website, or an unknown server or website). The packet server has a security and controlling role when routing the information packet towards and from the securing entity server or the trusted third party server. Advantageously, the packet server checks the integrity of the transmitted information packet, namely whether any data has been introduced by hackers in any section of the chain.

In a fourth step S34, the connection of the fifth type 5 already established in the first step (S31) is used for authorization purposes. The member user is asked via a securing entity window VMW for his authorization to transmit the non-identifying parts of his personal data from his partner bank entity to the securing entity server VMS.

In a fifth step S35, the connection of the eighth type 8 and seventh type 7 already established in the third step (S33) are used to transfer the authorization to the partner bank entity.

In a sixth step S36, a connection of the tenth type 10 is established between the packet server VPS and the trusted third party server TTPS, and a connection of the fourth type 4 is established between the trusted third party server TTPS and the securing entity server VMS. The connection of the tenth type 10 is a direct connection, namely a connection which doesn't need to use a web browser, combined to a secure communication protocol. For example, the secure communication protocol may be based on a secure socket layer and a securing entity proprietary encryption method. Upon reception of the member user authorization, the semi-identifying and non-identifying data related to the member user are transmitted from the partner bank entity to the trusted third party server TTPS via the packet server. The semi-identifying data are stored in at least the trusted third party server databases TTPDB. Advantageously, the semi-identifying data may be split and stored in different databases. The non-identifying data related to the member user are transmitted from the trusted third party server TTPS to the securing entity server VMS. The non-identifying data are stored in the securing entity server database VMDB.

In the second embodiment, the bank of the member user plays the role of a non sworn trusted third party because the bank has the knowledge of the identifying, semi-identifying and non-identifying data related to the member user. Indeed, these information are presented by the user to a non-sworn employee of the user' bank at the time he opens an account with the bank. It is to be noted that the bank only sends non-identifying data to the securing entity via the trusted third party entity. Thus, said information exchange respects the rules hereinbefore defined according to the category of personal data involved.

The user member of the communication device MD is now registered as a level two member user. Now, next time the member user will start the securing entity member software, a connection of the fifth type 5 will be initiated and he will be notified that his registration level has changed to a level two member user.

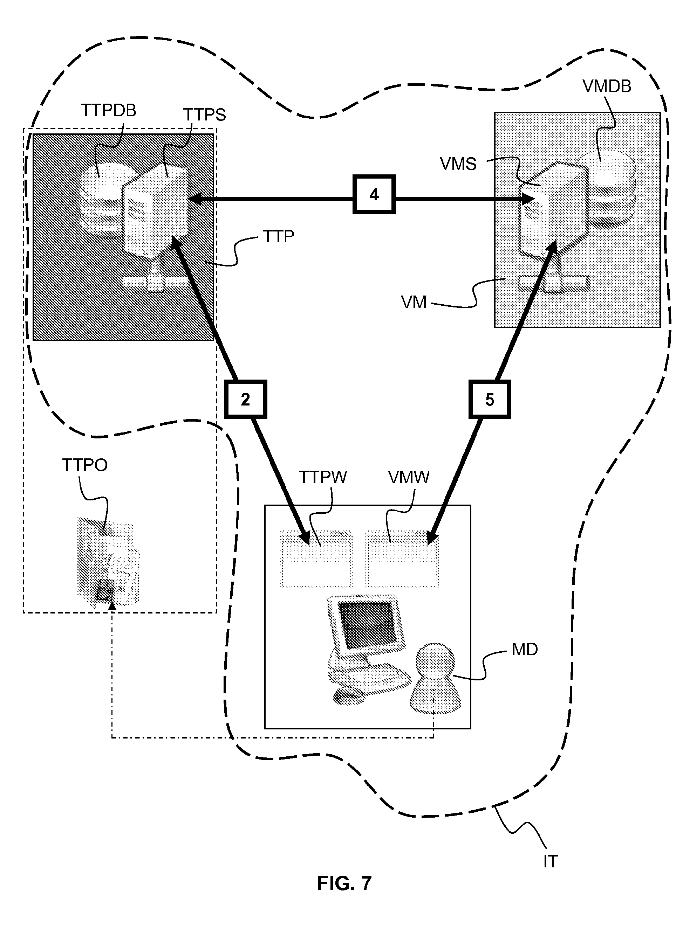

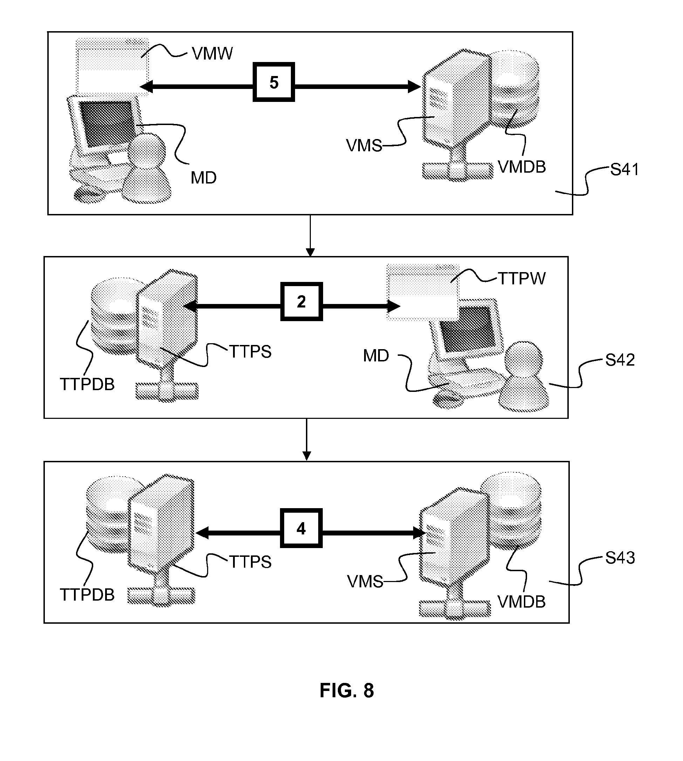

FIGS. 7 and 8 schematically illustrate a second part of the registration process of the member communication device according to a third and a fourth embodiment of the invention. The third embodiment of the invention corresponds to a third level of registration before the trusted third party entity. The fourth embodiment of the invention corresponds to a fourth level of registration before the trusted third party entity.

In a first step S41, a connection of the fifth type 5 is established between the member user of the communication device MD and the securing entity server VMS. More precisely, the member user starts the securing entity member software. The securing entity connection window VMW appears. After a successful input of his member identification and member password, the member user chooses the corresponding registration service in order to become a level three member user.

In a second step S42, a connection of the second type 2 is established between the member user of the communication device MD and the trusted third party server TTPS. More precisely, a trusted third party registration window TTPW appears. The member user of the communication device MD is invited to input semi-identifying and non-identifying personal data, for example those printed in his identification documents. Then, the member user is invited to visit the trusted third parties entity office TTPO with his genuine documents. The address of the trusted third parties entity office TTPO for visiting and showing the documents is indicated to the member user.

In a third step S43, a connection of the fourth type 4 is established between the trusted third party server TTPS and the securing entity server VMS. As soon as the member user meets with a sworn person of the trusted third parties entity at the trusted third parties entity office TTPO, the conformity of the documents is controlled. The sworn person is a person that typically is not suspected of any commercial or illegal use of the personal data that the user member will communicate to him. A sworn person may be for example a notary, a bailiff, a lawyer, or a legal officer. The documents presented during the meeting justify the personal data of the member user. As a consequence, the trusted third parties TTP certifies the conformity between the genuine documents presented and the semi-identifying or non-identifying personal data entered in his database during the second step (S42). The documents comprise identifying data that are archived at trusted third parties entity office TTPO. The documents are archived as paper copies of the official documents given by the member user to the trusted third parties entity, or as a scanned image files of the official documents given by the member user to the trusted third parties entity. The paper copies or scanned image files are archived just as they are. Consequently, the identifying data that they contain are not stored in any electronic database. Then, the connection of the fourth type 4 is established in order to inform the securing entity server VMS. Further, the non-identifying data parts of the personal data are sent by the trusted third party server TTPS to the securing entity server VMS. Thus, the information stored and exchanged respects the rules hereinbefore defined according to the category of personal data involved.

The user member of the communication device MD is now registered as a level three member user. Now, next time the member user will start the securing entity member software, a connection of the fifth type 5 will be initiated and he will be notified that his registration level has changed to a level three member user.

A member user can also become a level four member user according to the fourth embodiment. The corresponding registration process is similar to the third embodiment process. However, the fourth embodiment differs from the third embodiment in that during the meeting between the member user and the trusted person of the trusted third parties entity at the trusted third parties entity office TTPO, on the one hand biometric data of the member user are collected and on the other hand biometric tools are given to the member user. The biometric tools enable authenticating the presence of the member user with an improved reliability.

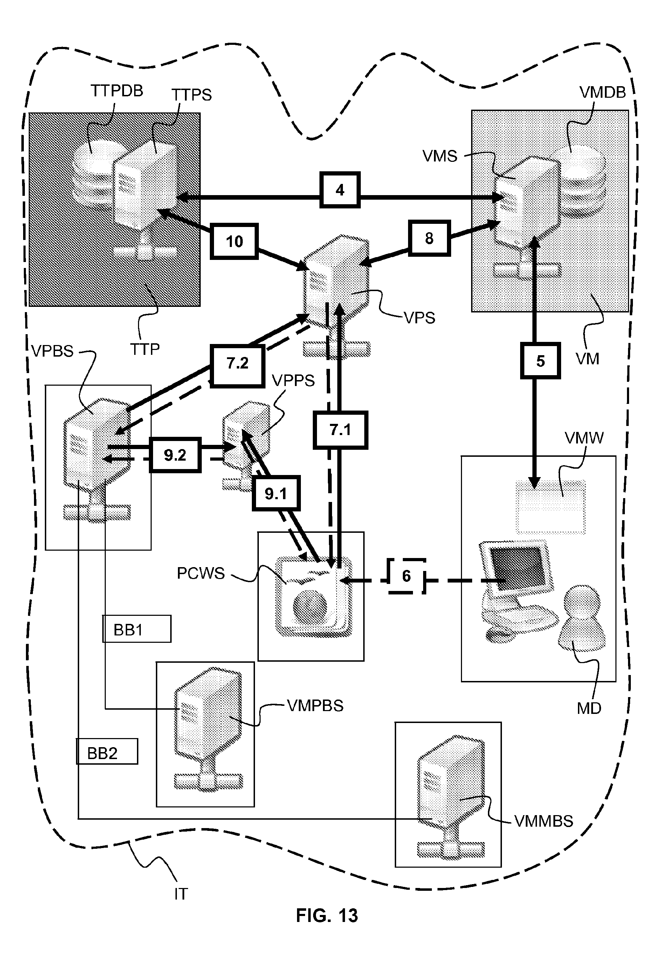

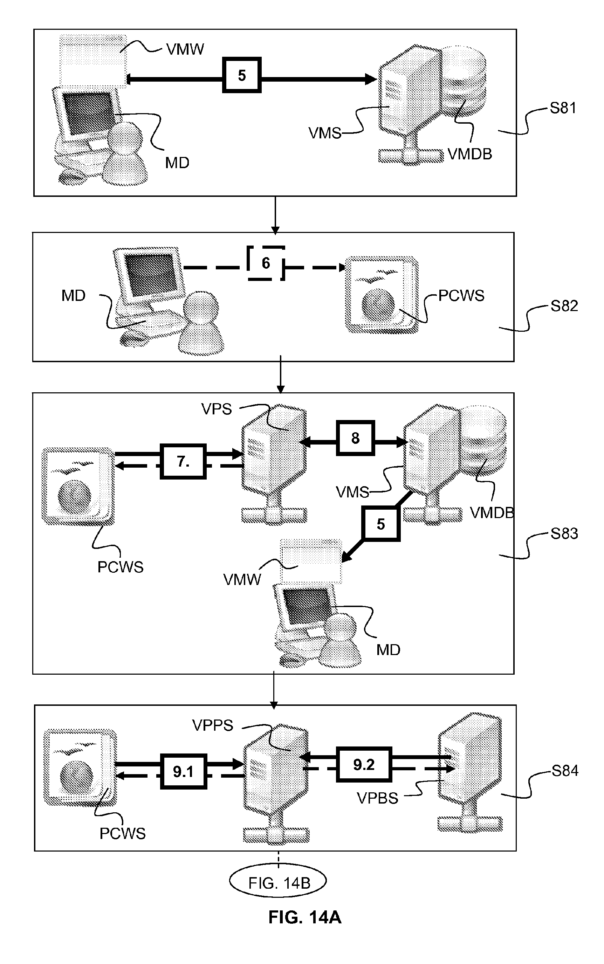

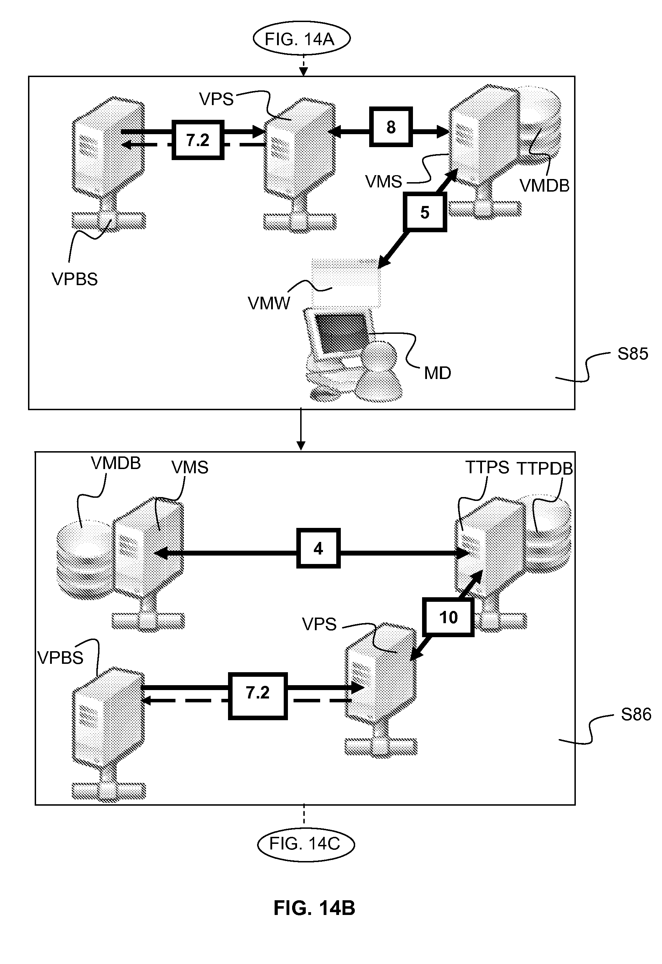

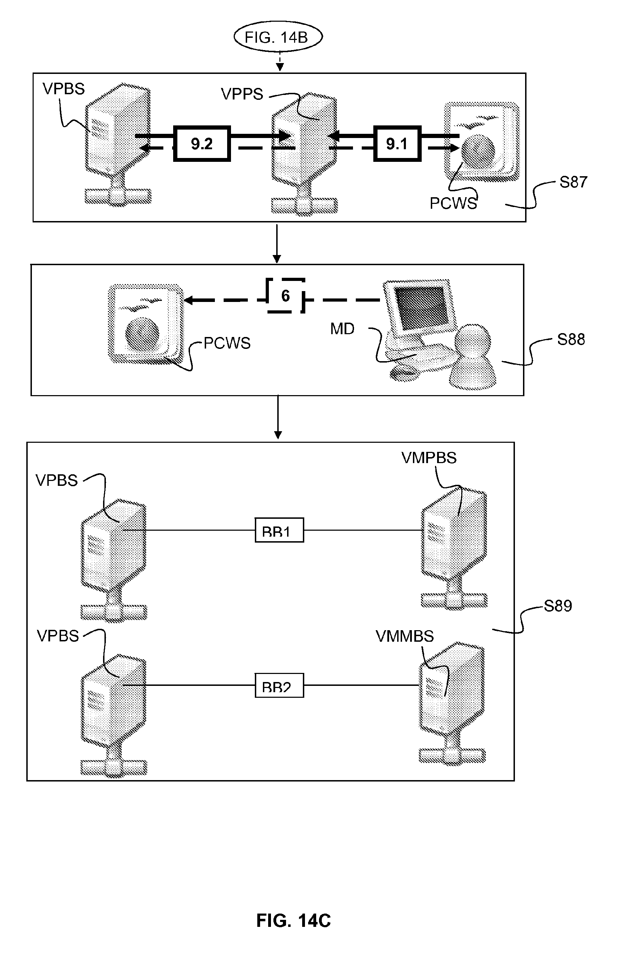

As an alternative to the various embodiments hereinbefore described, the member user may also communicate his credit card information to the trusted third party entity. The credit card information belongs to the category of semi-identifying data. The credit card information may be given to the trusted third party entity when the member user wishes to use the payment service offered by the securing entity. The payment service is an online payment service enabling never typing online the credit card information. This credit card information will be transmitted to a securing entity bank by the trusted third party server which reconstitutes the information dynamically under the control and the agreement of the member user at the time of the transaction. The online payment application will be described in details hereinafter in relation with FIGS. 13 and 14.

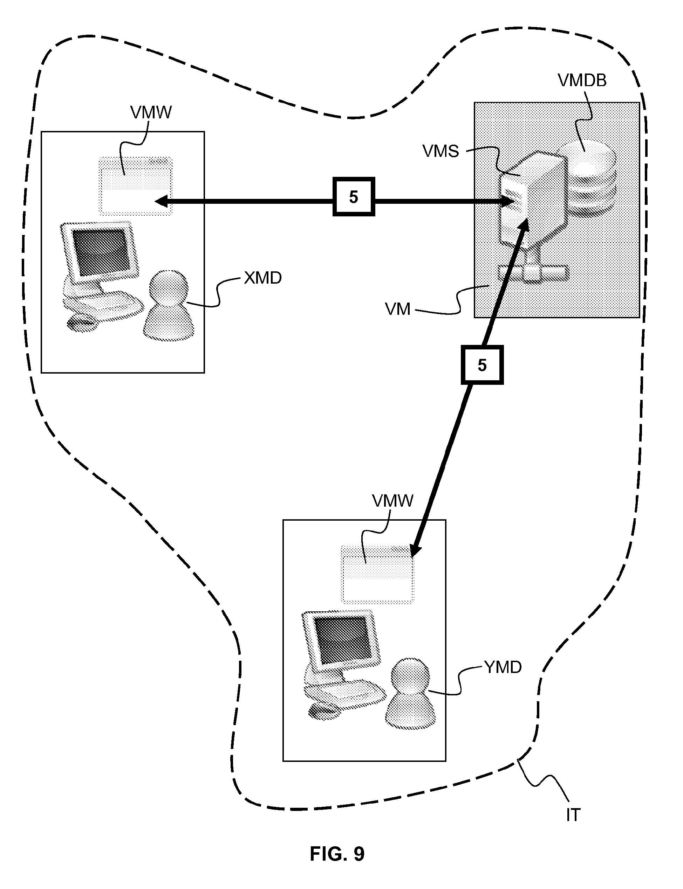

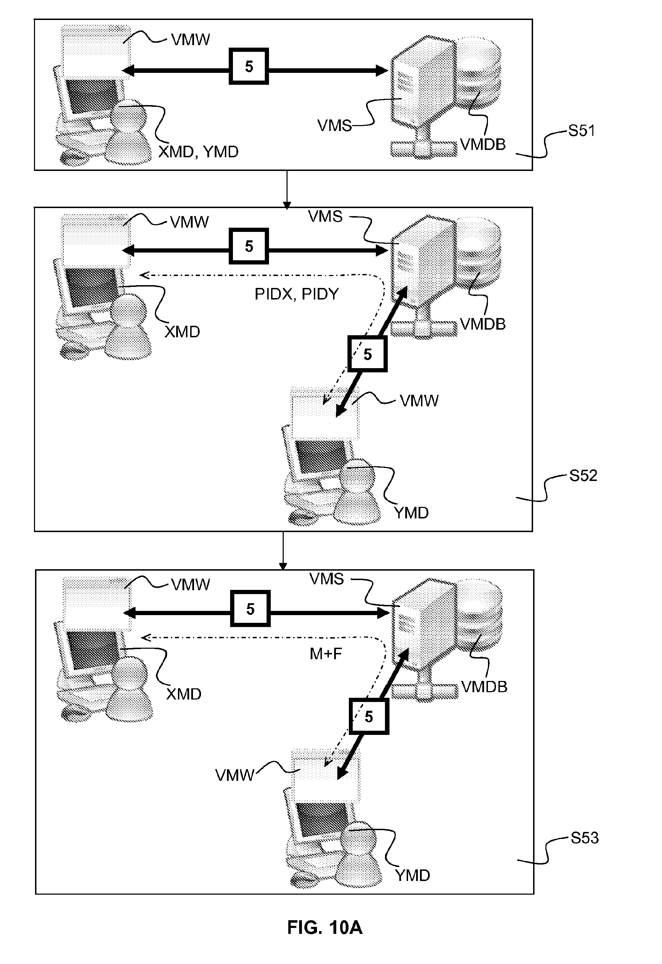

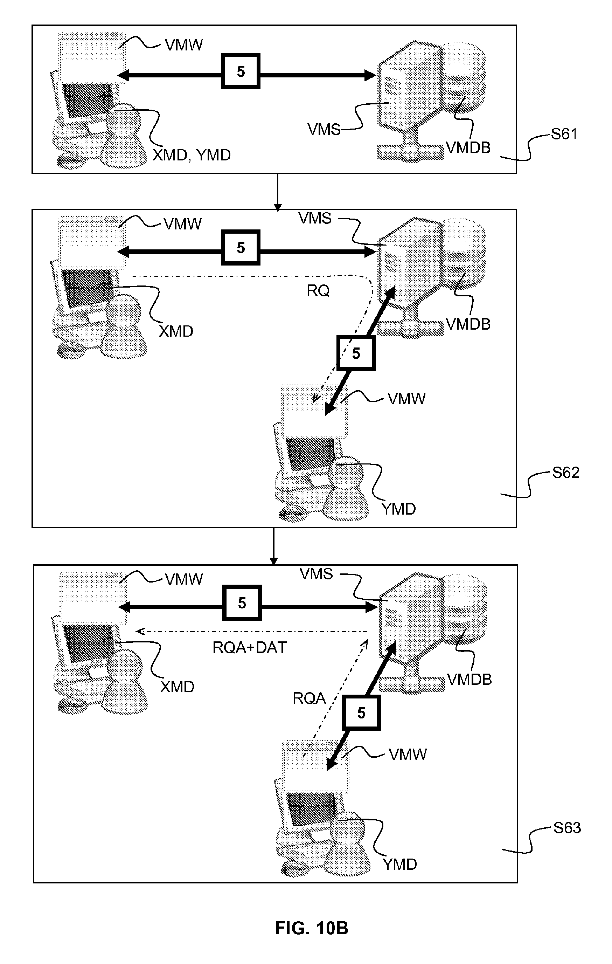

FIGS. 9, and 10A and 10B schematically illustrate a conference application or an identity verification application between two member devices, respectively.

Firstly, an example embodiment of the conference application will be described (FIGS. 9 and 10A). The conference application enables organizing a confidential conference between at least two mutually anonymous member users, namely a first member user of a communication device XMD and a second member user of a communication device YMD. Typically, a first member user of a first communication device XMD meets a second member user of a second communication device YMD on a chat, blog, or forum etc...., such as one on the World Wide Web. The member users decide to have together an anonymous and confidential exchange. The conference application process may be held according to the following sequence.

In a first step S51, a connection of the fifth type 5 is established between each member user of each communication device XMD and YMD and the securing entity server VMS. More precisely, each member user starts the securing entity member software. The securing entity connection window VMW appears on each communication device. Both member users input their respective member identifications and member passwords.

In a second step S52, an authentication step is implemented.

For the very first contact between both member users, a first and second alternative may be provided. According to the first alternative, each member user asks to the other member user to give his public identification PIDX, PIDY provided by the securing server VMS. According to the second alternative (not shown), both member users are directly connected through a partner website of the securing server. The partner website of the securing server is a website that has received and implemented an application programming interface delivered by the securing entity. Said application programming interface manages the authentication of the member user and the confidentiality of the conference.

After the first contact, each member user may add the other member user in his contacts list for quicker future conferences.

In a third step S53, the securing server VMS transfer directly the messages and files M+F from the first member user of the first communication device XMD to the second member user of the second communication device YMD. The securing entity commitment is that the messages and the files exchanged between the members users are not stored in the securing server VMS and/or database VMDB. Efficient functions are provided to each member user in order to give him a total control of the desired degree of confidentiality and the acceptable intrusion in his private life. For example, each member user controls his contact list and attributes pseudonyms to the member user listed in this contact list. Further, when a member user XMD unsuccessfully tries to contact another member user YMD, a non response of member user YMD is not justified and cannot be interpreted by member user XMD (member user YMD may be disconnected, or may not want to answer or may have black-listed member user XMD, etc...). A member user may leave a message in a securing entity message box of the other member user except for member users who have deactivated this functionality. The reception of a message in the securing entity message box may be coupled to a notification per email. Each member user may decide to inform all the other member users or only selected member users whether he is connected or not. Each member user may decide whether communication and data exchange with other member user may be stored or not in the securing entity server for the sole member user use.

Secondly, an example embodiment of the identity verification application will be described (FIGS. 9 and 10B). The identity verification application enables a first member user of communication device XMD verifying and confirming the authenticity of some non-identifying personal data of a second member user of a communication device YMD, both member users staying anonymous. The identity verification application process is held according to the following sequence.

In a first step S61, a connection of the fifth type 5 is established between each member user of each communication device XMD and YMD and the securing entity server VMS.

In a second step S62, the first member user of the first communication device XMD sends a request RQ to the second member user of the second communication device YMD comprising the indication of the non-identifying personal data of the second member user that he wishes to confirm.

In a third step S63, the second member user of the communication device YMD accept totally or partially, or refuse the request RQA. The decision of second member user together with the data RQA+DAT he has accepted to transfer are transmitted by the securing entity server VMS to the first member user of the communication device XMD.

Thus, the identity verification application solves a paradox for the first member user communication device XMD. The application enables confirming to a member user what another member user is (e.g. a male, a female, his age, etc...) without revealing who he is (his first name, last name, his address etc...). Consequently, only the non-identifying personal data are transmitted between member users under their controls and with their agreements.

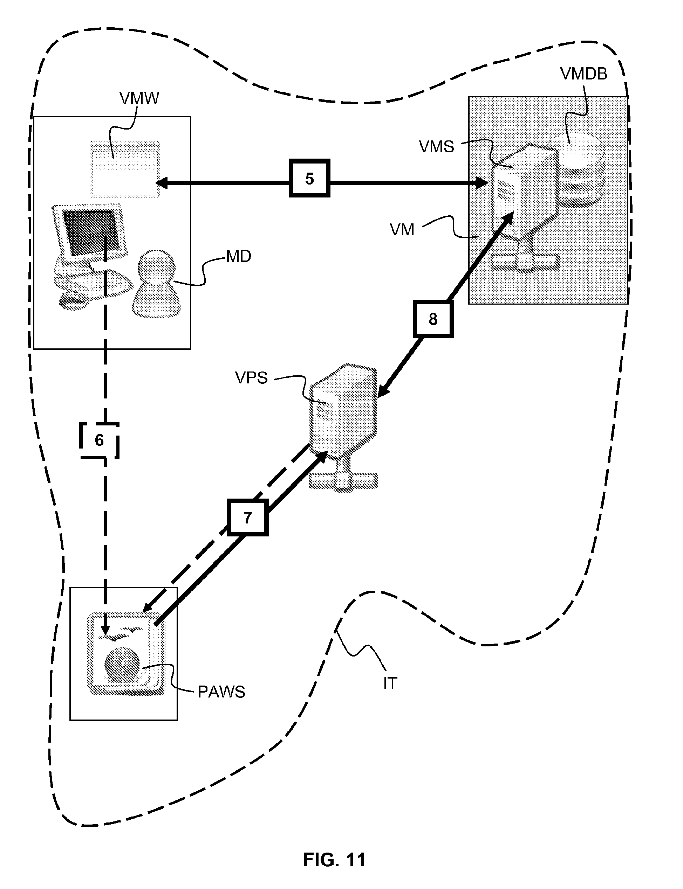

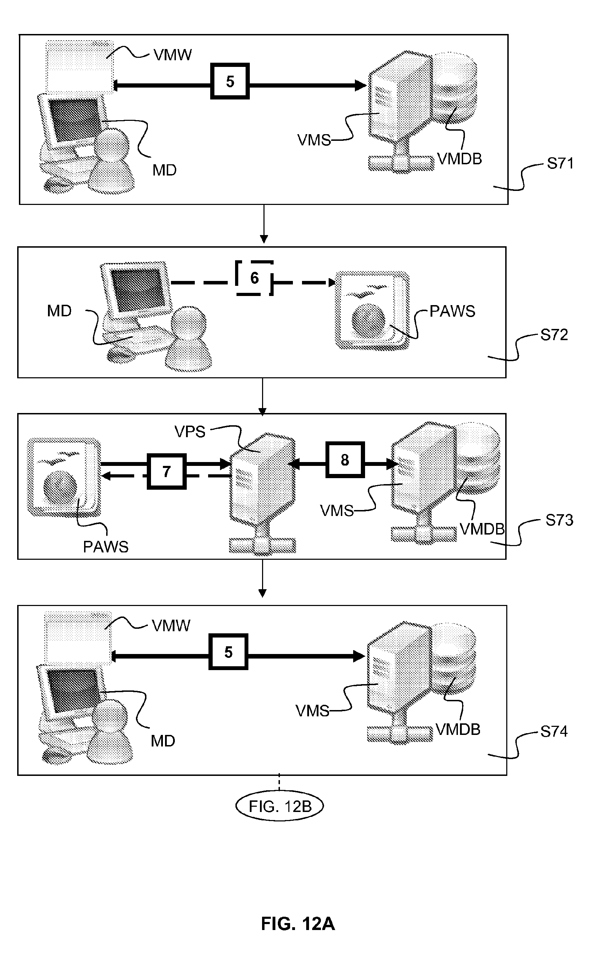

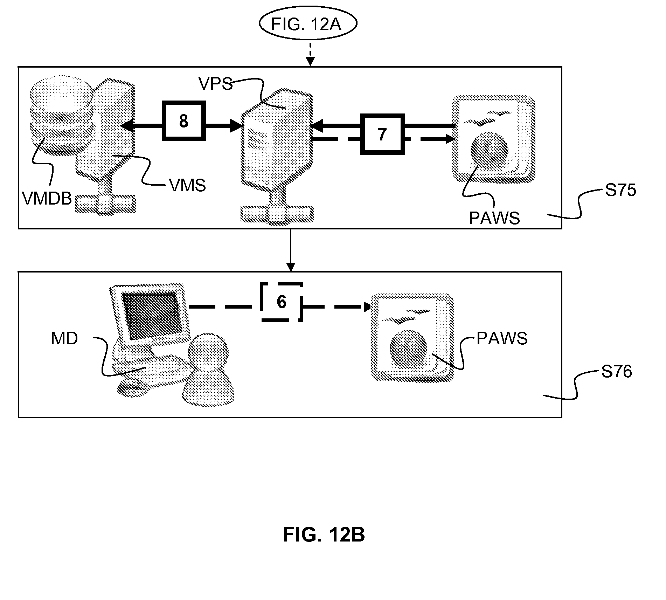

FIGS. 11, 12A and 12B schematically illustrate another identity verification application between a member device and a client website of the invention. This application may be held according to the following sequence.

In a first step S71, a connection of the fifth type 5 is established between the communication device member user MD and the securing entity server VMS. More precisely, the member user starts its securing entity software which establishes a connection of the fifth type 5 via the connection securing entity window VMW.

In a second step S72, a connection of the sixth type 6 is established between the member user of the communication device MD and a partner adult restricted services entity website PAWS. The partner adult restricted services entity website PAWS offers services reserved to adults, for example on line gambling, bets, adults' contents, etc.... The connection of the sixth type 6 is a connection according to an internet communication protocol between the communication device MD of the member user and the website of the partner adult restricted services website PAWS. The connection is established by means of the network browser such as a web browser that the member user operates on his communication device MD. The network or internet communication protocol may be, for example, either the hypertext transfer protocol (http) or the secure hypertext transfer protocol (https). The member user connects to the website of the partner adult restricted services PAWS and types his securing entity public identifier PID.

In a third step S73, a connection of the seventh type 7 and a connection of the eighth type 8 is established. The connection of the seventh type 7 is a direct connection, namely a connection which doesn't need to use a web browser, combined to a secure communication protocol. For example, the secure communication protocol may be based on a secure socket layer and a securing entity proprietary encryption method. It handles exchanges between the website of the partner adult restricted services PAWS and the packet server VPS. This connection is initiated by an application programming interface delivered by the securing entity to the partner adult restricted services website PAWS. The connection of the eighth type 8 is also a direct connection, namely a connection which doesn't need to use a web browser and an internet communication protocol like http or https. It handles exchanges between the packet server VPS and the securing entity server VMS. This connection is also initiated by the above mentioned application programming interface. These connections are used to send a request asking for the qualification of the member user personal data (is the member user a major or minor?) from the website of the partner adult restricted services PAWS to the securing entity server VMS. In the following, it is understood that the status of being major or minor for a person is related to the age of said person taking into consideration the legal age of majority which may be country dependent.

In a fourth step S74, the connection of the fifth type 5 already established in the first step (S71) is used for authorization purposes. The member user is asked for his authorization to transmit the non-identifying parts of his personal data related to his qualification from the securing entity server VMS to the partner adult restricted services website PAWS.

In a fifth step S75, the connection of the eighth type 8 and seventh type 7 already established in the third step (S73) are used to transfer the qualification (minor or major) of the member user (major or minor) to the partner adult restricted services website PAWS only in case of positive acceptance of the member user. Thus, only one non-identifying part of personal data of the member user is transferred from the securing entity server VMS to the partner adult restricted services website PAWS.

In a sixth step S76, the connection of the sixth type 6 already established in the second step (S72) is used for accessing the adult restricted service. The member user is informed that he is authorized or not to access to the service restricted to major adults.

FIGS. 13, 14A, 14B and 14C schematically illustrate an example embodiment of an online payment application between a member user communication device, a client website and bank servers according to the invention. This payment application may be held according to the following sequence.

In a first step S81, a connection of the fifth type 5 is established between the communication device member user MD and the securing entity server VMS. More precisely, the member user starts its securing entity software which establishes a connection of the fifth type 5 via the connection securing entity window VMW.

In a second step S82, a connection of the sixth type 6 is established between the member user of the communication device MD and the partner commercial website PCWS. More precisely, the member user of the communication device MD wants to buy an online service provided by a commercial website PCWS which is a partner of the securing entity. The connection of the sixth type 6 is a connection according to an network or internet communication protocol between the communication device MD of the member user and the website of the partner commercial PCWS. The connection is established by means of a network browser or web browser that the member user operates on his communication device MD. The network or internet communication protocol may be, for example, either the hypertext transfer protocol (http) or the secure hypertext transfer protocol (https). The member user connects to the website of the partner commercial PCWS and types his securing entity public identifier.

In a third step S83, various connections are made in order to confirm a payment intention through the securing entity payment service, said intention being given by the member user of the communication device MD. A connection of the seventh type 7.1 and a connection of the eighth type 8 are established. The connection of the seventh type 7.1 is used to send a request for payment confirmation of the member user by the server or website of the partner commercial PCWS to a packet server VPS. Then, the connection of the eighth type 8 is used to transmit the request for payment confirmation from the packet server VPS to the securing entity server VMS. Subsequently, the connection of the fifth type 5 already established is used to ask for a confirmation to the member user of the communication device MD. Then, the answer of the member user is sent to the server or website of the partner commercial PCWS through the connections of the eighth type 8 and of the seventh type 7.1 already established. In the case of confirmation by the member user of his intention to pay through the securing entity payment service, then the payment process goes ahead. Otherwise, the payment process is stopped.

In a fourth step S84, various connections are made in order to request for the payment acceptation by the bank entities involved in the payment process. The payment process involves the member user's bank server VMBS, the server or website of the partner commercial bank VMPBS, and the securing entity bank VPB.

A connection of the ninth type 9.1 is established between the partner commercial website VMPWS and a payment packet server VPPS. Another connection of the ninth type 9.2 is also established between the payment packet server VPPS and the securing entity bank server VPBS. The connections of the ninth type 9.1 or 9.2 are direct connections, namely connections which do not need to use a web browser, combined to a secure communication protocol. For example, the secure communication protocol may be based on a secure socket layer and a securing entity proprietary encryption method. The connections of the ninth type 9.1 and 9.2 are used to transmit a request for payment acceptation from the partner commercial website PCWS to the securing entity bank server VPBS via the payment packet server VPPS. These connections are made thanks to an application programming interface delivered by the securing entity to the partner commercial website PCWS and to the securing entity bank server VPBS.

The payment packet server VPPS is similar to the packet server VPS. The payment packet server VPPS is dedicated to the payment process and enables securing entity partner bank VPB to have a direct relation with the partner commercial website PCWS.

In a fifth step S85, various connections are made in order to confirm authorization to send credit card information, said authorization being given by the member user of the communication device MD. The purpose of the authorization is to obtain the agreement of the member user that the trusted third party server TTPS is authorized to send the member user's credit card information to the securing entity bank server VPBS. A connection of the seventh type 7.2 and a connection of the eighth type 8 are established. The connection of the seventh type 7.2 is used to send a request for authorization confirmation of the member user by the securing entity bank server VPBS to the packet server VPS. Then, the connection of the eighth type 8 is used to transmit the request for authorization confirmation from the packet server VPS to the securing entity server VMS. Subsequently, the connection of the fifth type 5 already established is used to ask for the authorization confirmation to the member user of the communication device MD.

In a sixth step S86, a connection of the fourth type 4 is established between the trusted third party server TTPS and the securing entity server VMS. If the member user has confirmed his authorization, then the securing entity server VMS transmits the acceptation to the trusted third party server TTPS, via the connection of the fourth type 4. As a consequence, the trusted third party server TTPS dynamically reconstitutes the credit card information of the member user. For example, credit card information that are split in different encrypted parts stored in different databases are decrypted and combined, at the time of the transaction, to form the credit card information of the member user. If the member user has not confirmed his authorization, the payment process is stopped. Then, a connection of the tenth type 10 is established between the trusted third party server TTPS and the packet server VPS. The connection of the tenth type 10 is a direct connection, namely a connection which doesn't need to use a web browser, combined to a secure communication protocol. For example, the secure communication protocol may be based on a secure socket layer and a securing entity proprietary encryption method. Finally, the authorization confirmation together with the credit card information is sent via the connection of the tenth type 10, from the trusted third party server TTPS to the packet server VPS and then, via the connection of the seventh type 7.2, from the packet server VPS to the securing entity bank VPB.

In a seventh step S87, the connections of the ninth type 9.2 and 9.1 already established are used by the securing entity bank server VPBS to transmit its acceptation of payment to the partner commercial website PCWS.

In an eight step S88, the connection of the sixth type 6 already established is used by the partner commercial website PCWS to inform the user member of the communication device MD that his payment using the securing entity payment service is accepted.

In a ninth step S89, bank to bank transactions take place in order to complete the payment process. The securing entity bank server VPBS transfers BB1 the transaction amount to the bank of the partner commercial website VMPWS. The securing entity bank server VPBS request BB2 to the member user's bank server VMBS a transfer of the transaction amount.

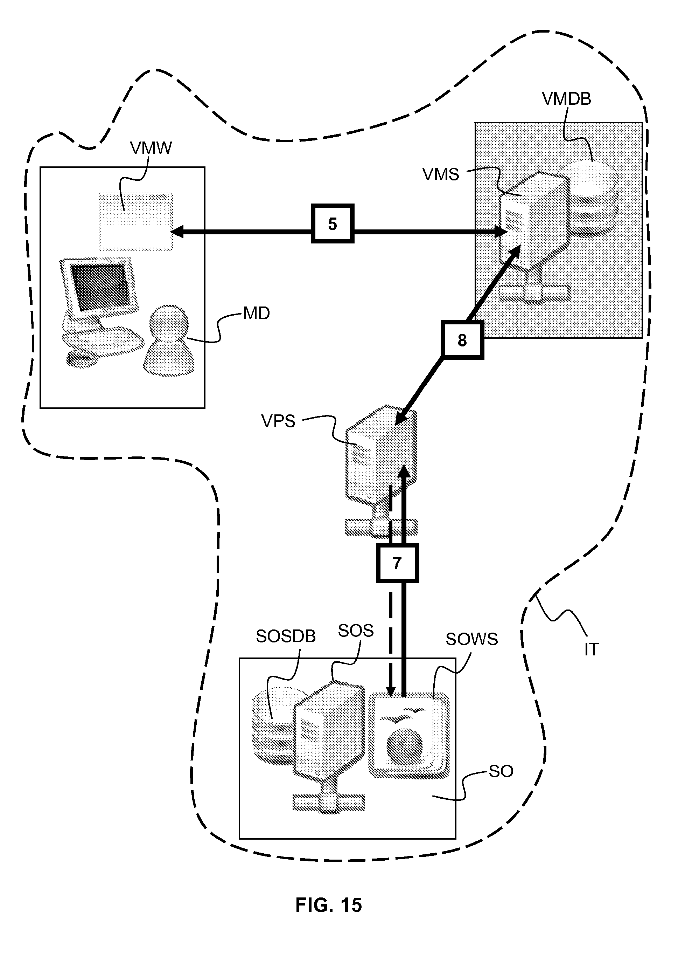

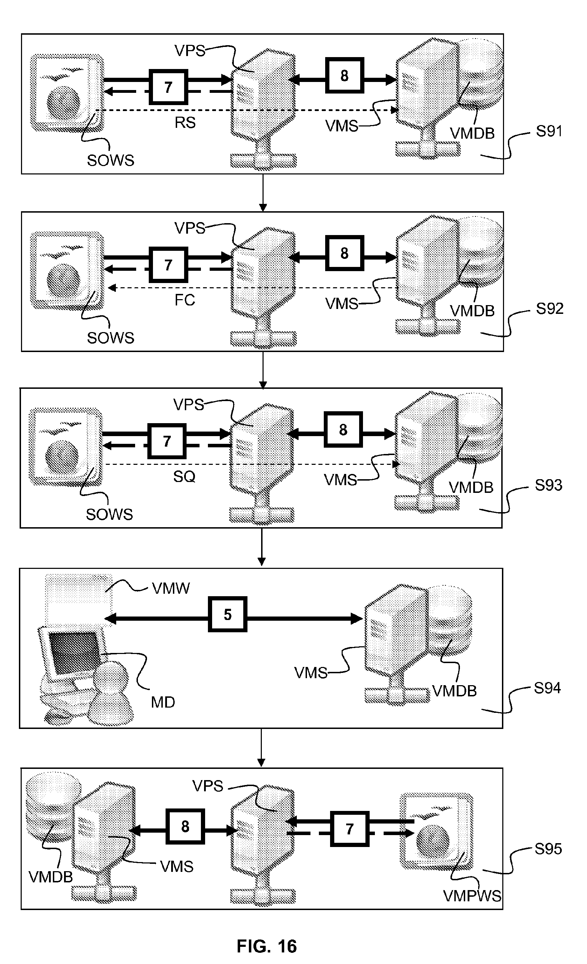

FIGS. 15 and 16 schematically illustrate an example embodiment of an online survey application according to another aspect of the invention. The online survey application consists in organizing a survey among member user based on a request by a partner survey organization (e.g. a survey company or a survey department of a company) made to the securing entity. The online survey application may be held according to the following sequence.

In a first step S91, various connections are made in order to request for a survey made by a partner survey organization SO to the securing entity server VMS. The partner survey organization server SOS uses an application programming interface delivered by the securing entity to send a request for a survey to the securing entity server VMS. A connection of the seventh type 7 and a connection of the eighth type 8 are established. The connection of the seventh type 7 is made by the partner survey organization website SOWS and a request for a survey is sent from the partner survey organization website SOWS to a packet server VPS. Then, the connection of the eighth type 8 is made from the packet server VPS to the securing entity server VMS.

The request for a survey RS indicates the member user's profile and the number of member user that are needed for the survey. The member user's profile is only based on non-identifying personal data.

In a second step S92, the securing entity server VMS sends back to the partner survey organization website SOWS, via the connections of the eighth type 8 and seventh type 7 already established, a feasibility confirmation FC. If the survey is not feasible, the process is stopped.

In a third step S93, upon reception of the feasibility confirmation, the partner survey organization uses a tool included in the application programming interface provided by the securing entity so as to create a questionnaire. The questionnaire is compatible with the environment of the communication device of the member user MD. Advantageously, the questionnaire is also tested and validated with the application programming interface. Subsequently, the questionnaire SQ is sent to the securing entity server via newly established connections of the seventh type 7 and eighth type 8 (similar to the ones described in relation with the first step).

In a fourth step S94, a connection of the fifth type 5 is established between the securing entity server VMS and selected communication device member users MD. The connection of the fifth type 5 is used to invite selected communication device member users MD to participate to the survey. The survey may be a remunerated survey. More precisely, the invitation is initiated when a member user starts his securing entity member software and establishes a connection of the fifth type 5 with the securing entity server VMS. If the member user corresponds to the profile expected by the partner survey organization, then an invitation window appears providing an incitation to participate to the survey. Advantageously, the member user has an access to useful information, for example what sort of survey, for whom, for what, what non-identifying personal data are needed, etc.... As a consequence, the member user can accept to participate to the survey with full knowledge of the facts. If the member user accepts to participate to the survey, a securing entity survey window appears. The securing entity survey window submits the questionnaire to the member user. Then, the member user answers to the questionnaire and validate it. This step may be repeated by the securing entity until a sample in conformity with the request made by the partner survey organization is achieved.

In a fifth step S95, upon validation of the questionnaire by the member user, the connections of the eighth type 8 and seventh type 7 are once again established. These connections are used to transmit the results of the survey SRES from the securing entity sends to the partner survey organization. The results transmitted by securing entity server VMS contains, for each member user having participate to the survey, the answers to the questionnaire and only the non-identifying personal data expected by the partner survey organization and accepted by the member. Thus, the survey is a completely anonymous survey from the point of view of the partner survey organization and from the point of view of the securing entity.

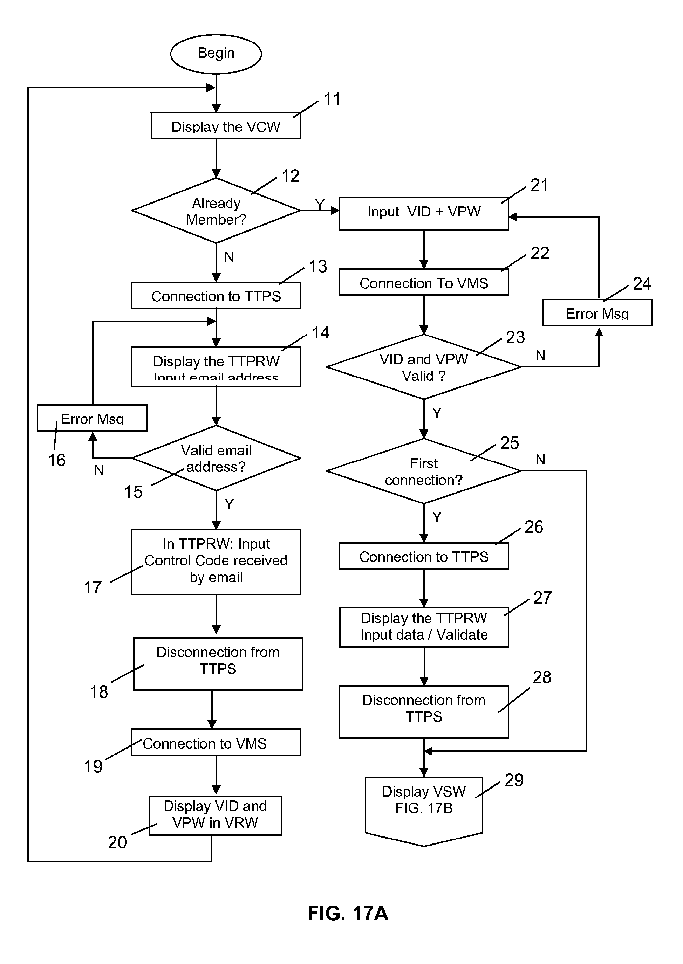

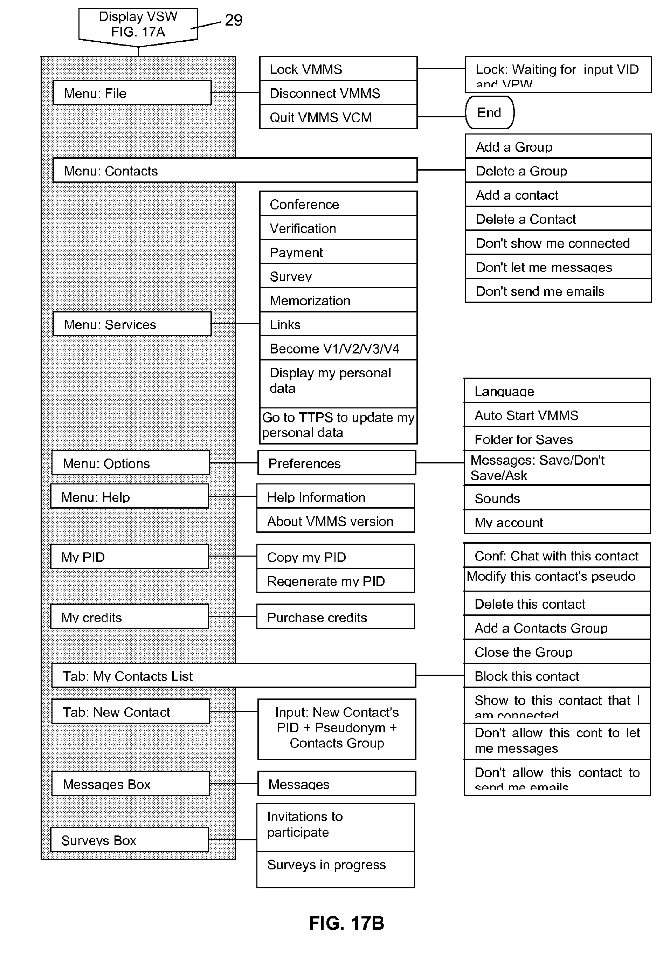

FIG. 17A and 17B is a flowchart illustrating the operation and functionalities of an example embodiment of the member user software VMMS provided by the securing entity to the member user.

When a user starts the member user software VMMS, a securing entity connection window VCW is displayed (11). The user is invited to indicate (12) his status, namely non-member user or member user.

For non-member user, a registration process begins by connecting the communication device of the user to the trusted third party server (13). A trusted third party registration window TTPRW is displayed and the user is invited to input an electronic transmission address, e.g. an email address (14). The validity of the electronic transmission address is checked (15). In case of invalid electronic transmission address, an error message is sent and displayed (16). The user is once again invited to input an electronic transmission address via the trusted third party registration window TTPRW. In case of valid electronic transmission address, the user is invited to input the control code (17) received together with the message sent to his electronic transmission address. Then, the communication device of the user is disconnected of the trusted third party server TTPS (18) and a connection is established with the securing entity server VMS (19). A securing entity registration window WMRW displays the member user identification VID and the member user password VPW (20) before displaying (11), once again, the securing entity connection window VCW.

For member user, the securing entity connection window VCW invites to input (21) the member user identification VID and the member user password VPW. A connection is established (22) between the member user communication device and the securing entity server VMS. The validity of the member user identification VID and the member user password VPW is checked (23). When either the member user identification VID or the member user password VPW is incorrect, the securing entity connection window VCW invites, once again, the member user to input (21) the identification VID and password VPW. In case of valid identification VID and password VPW, it is checked whether the connection to the securing entity server through the connection window VCW is a first connection (25). When the member user connects for the first time, he is invited to complete a second part of the registration process. A connection between the member user communication device and the trusted third party server TTPS is established (26). The trusted third party registration window TTPRW invites the member user to input personal data and validate them (27). Upon validation, the member user communication device is disconnected from the trusted third party server TTPS (28). For member user having completed the second part of the registration process, a securing entity services window VSW is displayed (29).

An example embodiment of such a securing entity services window VSW is shown in FIG. 17B. The securing entity services window VSW may display (29) various menus and may offer various functionalities. A file menu may display locking, disconnection and quit functions. A contacts menu may display "add a group", "delete a group", "add a contact", and "delete a contact" functionalities, and may help managing connection, messages, emails and contacts list. A services menu may display the various services offered by the securing entity, for example member level registration, online conference application, online verification application, online payment application, online survey application. The services menu may also offer the function of displaying the personal data of the member user and updating the personal data via the trusted third party server. An options menu may help managing the preferences of the member user in term of language, saving folder, messages, sounds and account. A personal identification PID menu may offer functions in relation with the personal identification PID, for example copying the PID, regenerating the PID. The securing entity services window VSW may also display a help menu and various boxes, e.g. messages box, surveys box.

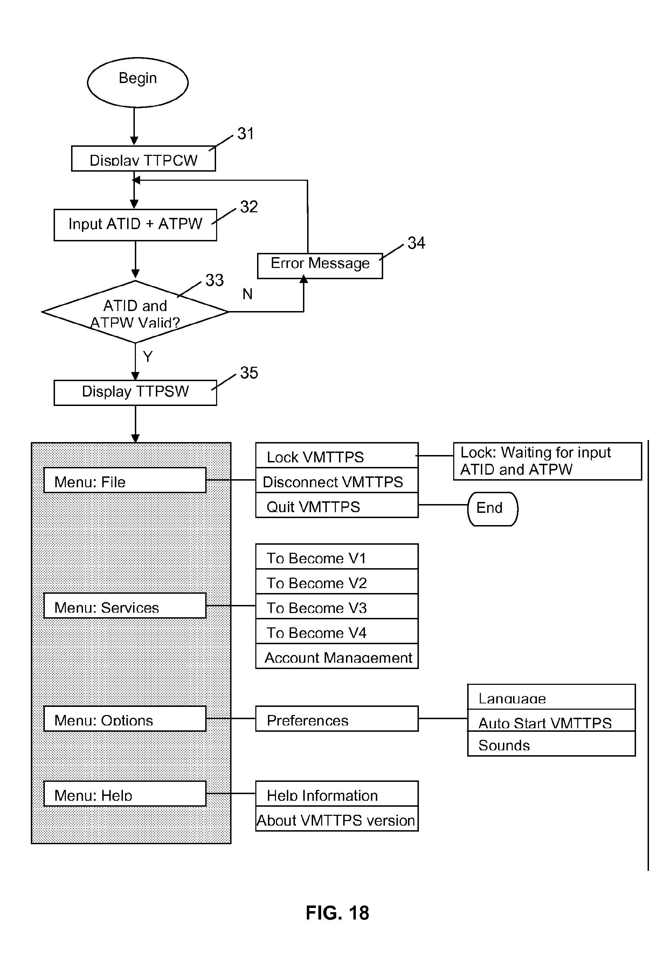

FIG. 18 is a flowchart illustrating the operation and functionalities of an example embodiment of the software provided by the securing entity to the trusted third party software.

When a person of the trusted third party entity starts the trusted third party software, a trusted third party connection window is displayed TTPCW (31). The person is invited to input (32) the administration trusted third party identifier ATID and the administration trusted third party password ATPW. The validity of the identifier and password is checked (33). Upon input of a valid identifier and password a trusted third party service window TTPSW is displayed (35). Otherwise an error message (34) is displayed together with a new invitation to input the identifier and password.

An example embodiment of such a trusted third party service window TTPSW is also shown in FIG. 18. The trusted third party service window TTPSW may display various menus and may offer various functionalities. A file menu may display locking, disconnection and quit functions. A services menu may display the various functionalities related to the different level of registration, and also member user account management. The trusted third party service window TTPSW may also display an option/preference menu, and a help menu.

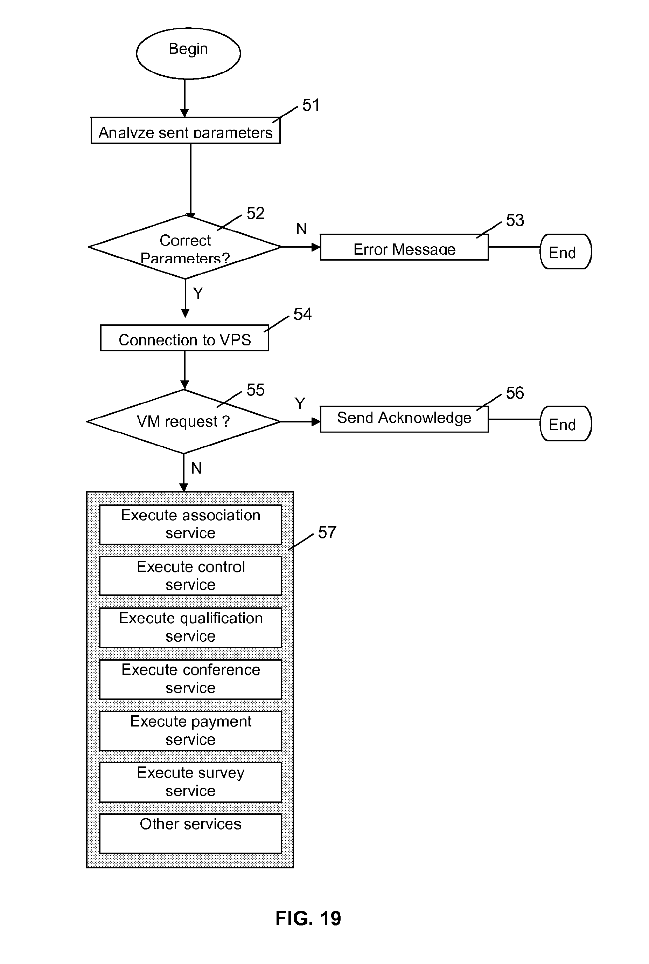

FIG. 19 is a flowchart illustrating the operation and functionalities of an example embodiment of the interface software provided by the securing entity to the partner client entity, namely bank, commercial entity, survey entity, etc.... The interface software is an interface between a client entity server and the packet server in order to route service request between the client entity server and the securing entity server via the packet server and connection request between the securing entity server and the client entity server via the packet server.

When a request is sent between the client entity server and the securing entity server, the interface software analyze the parameters (51) sent with the request. The parameters are checked (52). The parameters comprise the information corresponding to the services that needs to be executed. When the parameters are incorrect, an error message is delivered (53). Otherwise, a connection with the packet server VPS is established (54). The origin of the request is then checked (55). If the request is sent from the securing entity server to the partner client entity, then an acknowledgment is sent (56). If the request is sent from the partner client entity to the securing entity server, then the corresponding services are executed (57). As example, the service may be an association, a personal data verification, a qualification verification, a conference, a payment, a survey or other application.

### FINAL REMARKS

The drawings and their description hereinbefore illustrate rather than limit the invention. Indeed, though, in the hereinbefore description and in the drawings, the communication device is shown as a computer desktop, the invention is not limited to this particular example. Indeed, the wording "communication device" is used in a broad meaning. It may be a computer laptop, a mobile phone, or a personal digital assistant, etc... that have a connection functionality to a communication network. It may be connected to the communication network via wire or wireless. As example, the communication network may be a mobile telecommunication network 3G mobile, GPRS, UMTS or CDMA2000, a local area network LAN or a wireless local area network WLAN, WiMAX, or a distant telecommunication network RL coupled to Internet by ADSL or SDSL, or a cable television network, etc.... Further, the exchange of data between entities that are made via email is not limitative as any other means of exchanging data via electronic transmission, e.g. short message services SMS, may also be used.

Though some applications of the invention have been described, the invention is not limited to online identities verification, online confidential conferences, online payment, and online participation to a survey. The invention may also be used in numerous other services.

The invention may be used for presence control, identity control, confirmation control, concurrently with any service.

The invention may also be used for association service. When a partner of the securing entity is also a member user, then the association service enables establishing an association between the client and the member user. This association permits to the partner to offer to his associated clients many services offered by the securing entity (for example conference and verification applications between the clients, payment and survey applications between the partner and his clients).

Further, the invention may be used for a qualification service of non-identifying personal data. For example, the securing entity can qualify one non-identifying personal data such as being major or minor for a website with restricted access to major adults, in case there is a legal obligation (e.g. online gambling and betting websites in some countries).

Furthermore, the invention may be used for a minor's protection services. For example, access to partner's services according to the member's age may be filtered. The invention may also be used for email confirmation services via the trusted third party servers (Anti-spam service), anonymous telephone calls service, filtered access to forums using the member user's registration level or a non-identifying personal data criteria, memo service (save and restore access codes).

As an alternative to the downloading, installing and using the securing entity member software in order to connect to the securing entity server, the user may avoid these by connecting to a website of the securing entity. Said website may provide similar functions as those of the securing entity member software. Preferably, this connection is based on a secure hypertext transfer protocol (https). Though, not as secure as using the securing entity member software, this alternative enables the user becoming a member user easily and quickly.

Though, the steps of the sequence have been labeled in the description (first step, second step, etc...), the use of these labels is not intended to require a strict ordering of the steps unless otherwise identified.

Any reference sign in a claim should not be construed as limiting the claim. The word "comprising" does not exclude the presence of other elements than those listed in a claim. The word "a" or "an" preceding an element does not exclude the presence of a plurality of such element.

## Claims

1. A method of conducting a communication over a communication network, the method comprising:
- registering a user of a communication device (MD) as a member user of a securing entity, the securing entity (VM) authenticating personal data of the member user via a trusted third party entity (TTP),
- sorting the personal data of the member user according to categories comprising identifying data, non-identifying data and semi-identifying data, non-identifying data and semi-identifying data being correlated to identifying data by a sworn person of the trusted third party entity (TTP), only at least one of non-identifying data and semi-identifying data being requestable by any client entity (YMD, PAWS, PCWS, SOS) during a communication,
- archiving identifying data in a trusted third party entity (TTP),
- electronically storing at least a part of semi-identifying data in a trusted third party entity database (TTPDB), and non-identifying data in a securing entity database (VMDB).

2. The method of conducting a communication according to claim 1, further comprising:
- responding to a request for at least one of non-identifying data and semi-identifying data made by the client entity (YMD, PAWS, PCWS, SOS) to the securing entity (VM), wherein responding to the request is subject to an authorization given by the member user (MD, XMD).

3. The method of conducting a communication according to claim 1 or 2, wherein a registration of the user (MD) of the communication device is a provisional registration of the user (MD) of the communication device before the securing entity (VM) and the trusted third party entity (TTP), the provisional registration comprising:
- connecting the communication device of the user (MD) to a securing entity server (VMS) by using a network browser, downloading and installing a securing entity member software on said communication device, the securing entity member software initiating a connection between the communication device (MD) and a server of the trusted third party entity (TTPS), and inviting the user (MD) of the communication device to input an electronic transmission address of the user, the trusted third party server (TTPS) sending a control message to the user (MD) of the communication device, the content of the control message comprising a control code,
- requesting the user (MD) to input the control code in an appropriate field of a trusted third party registration window (TTPW), and to provide non-identifying data,
- sending non-identifying data from the trusted third party server (TTPS) to the securing entity server (VMS), and storing the non-identifying data in a securing entity server database (VMDB),
- displaying a member identification (ID) and a member password (PW) in a securing entity registration window,
- inviting the user (MD) of the communication device to input said member identification and member password in a securing entity connection window (VMW), and
- registering the user (MD) as a member user should an input of the member identification and member password be successful.

4. The method of conducting a communication according to claim 3, wherein the registration of the user (MD) of the communication device is a first level registration of the member user (MD) of the communication device before the securing entity (VM) and the trusted third party entity (TTP), the first level registration comprising:
- initiating the securing entity (VM) member software on the communication device of the member user (MD),
- inviting the member user (MD) to choose a mode of the first level registration should an input of the member identification and member password be successful, the mode of the first level registration being selected from the group consisting of a first registration mode and a second registration mode in a trusted third party registration window (TTPW),
- inviting the member user (MD) to send a copy of documents showing personal data by courier or postal mail delivery to a trusted third parties entity office (TTPO) address should the first registration mode be chosen,
- inviting the member user (MD) to send a message comprising an attached file containing scanned documents showing personal data to a trusted third parties server (TTPS), should the second registration mode be chosen,
- archiving the identifying data at trusted third parties entity office (TTPO),
- sending non-identifying data from the trusted third party server (TTPS) to the securing entity server (VMS), and storing non-identifying data in the securing entity server database (VMDB), and
- registering the user (MD) as a first level member user.

5. The method of conducting a communication according to claim 3 or 4, wherein, upon registering the user (MD) of the communication device, the securing entity server (VMS) delivers a securing entity public identifier (PID) which is a temporary identifier to the member user (MD).

6. The method of conducting a communication according to any one of the claims 3 to 5, wherein the registration of the user (MD) of the communication device is a second level of registration of the member user (MD) of the communication device before the securing entity (VM) and the trusted third party entity (TTP), the second level registration comprising:
- initiating the securing entity member software on the communication device of the member user (MD),
- inviting the user (MD) to input his personal user known third party identification code in a securing entity connection window (VMW) should an input of the member identification and member password be successful, the user known third party being selected from a group consisting of a bank entity (MB), a financial entity and an insurance entity,
- checking that a user known third party corresponding to the personal user known third party identification code is a partner entity of the securing entity (VM),
- inviting the member user (MD) to connect to a website of the partner user known third party entity (MBWS) and access to his account,
- creating an association between the website of the partner user known third party entity (MBWS) and the securing entity (VM) by typing the user securing entity public identifier (PID),
- requesting the member user (MD) authorization to transmit non-identifying data from the partner user known third party entity to the securing entity server (VMS),
- sending semi-identifying and non-identifying data from the partner user known third party entity to the trusted third party server (TTPS) via a packet server (VPS), and storing at least a part of the semi-identifying in the trusted third party server databases (TTPDB), and
- sending non-identifying data from the trusted third party server (TTPS) to the securing entity server (VMS), and storing said non-identifying data in the securing entity server database (VMDB).

7. The method of conducting a communication according to any one of the claims 3 to 6, wherein the registration of the user (MD) of the communication device is a third level of registration of the member user (MD) of the communication device before the securing entity (VM) and the trusted third party entity (TTP), the third level registration comprising:
- initiating the securing entity member software on the communication device of the member user (MD),
- initiating a connection between the communication device of the member user (MD) and the trusted third party entity server (TTPS), should an input of the member identification and member password be successful,
- inviting the member user of the communication device (MD) to input semi-identifying and non-identifying personal data in an appropriate field of a trusted third party registration window (TTPW),
- inviting the member user of the communication device (MD) to visit the trusted third parties entity office (TTPO) with genuine documents comprising identifying, semi-identifying and non-identifying personal data by indicating an address of the trusted third parties entity office (TTPO),
- controlling a conformity of the personal data of the genuine documents with the input semi-identifying and non-identifying personal data, and correlating identifying data to semi-identifying data and non-identifying data, controlling conformity and correlating identifying data being performed by a sworn person of the trusted third parties entity (TTP),
- archiving identifying data in the trusted third party entity office (TTPO), electronically storing semi-identifying data in the trusted third party entity database (TTPDB),
- sending non-identifying data to the securing entity server (VMS), and electronically storing non-identifying data in the securing entity database (VMDB), and
- registering the member user (MD) as a third level member user.

8. The method of conducting a communication according to claim 7, wherein the registration of the user (MD) of the communication device further comprises:
- collecting biometric data of the member user, and giving biometric tools to the member user, and
- registering the member user (MD) as a fourth level member user.

9. The method of conducting a communication according to any one of the claims 3 to 8, wherein registering the user (MD) of the communication device further comprises:
- inviting the user (MD) to transmit credit card information to the trusted third party server (TTPS),
- electronically storing the credit card information as semi-identifying data in the trusted third party entity database (TTPDB), and
- transmitting the credit card information from the trusted third party server (TTPS) to a securing entity bank under the control and the agreement of the member user (MD) at the time of a transaction.

10. The method of conducting a communication according to anyone of the preceding claims, wherein the at least a part of semi-identifying data are stored in split databases (TTPDB) of the trusted third party entity (TTP), the semi-identifying data being reconstituted dynamically when needed at the time of a transaction.

11. The method of conducting a communication according to anyone of the preceding claims, wherein at least another part of semi-identifying data are electronically stored in the securing entity database (VMDB).

12. The method of conducting a communication according to anyone of the preceding claims, wherein the exchanges of data between a partner commercial entity (PAWS) or a partner bank entity (VMBS) and the securing entity server (VMS) are handled via a packet server (VPS, VPPS).

13. A method of conducting a communication according to any one of the claims 1 to 12 in a confidential and anonymous conference over a communication network, wherein the method comprises:
- initiating at least a first and a second securing entity member software on a first and second communication device of a first and a second member user (XMD, YMD), respectively,
- initiating a connection between the respective communication device of the respective member user and the securing entity server (VMS) should an input of each member identification and member password be successful,
- mutually authenticating each user with respect to the other by exchanging their respective public identifier (PIDX, PIDY), and
- transferring messages between the member users through the securing entity server (VMS).

14. A method of conducting a communication according to any one of the claims 1 to 12 in an identity verification application over a communication network, wherein the method comprises:
- initiating a first and a second securing entity member software on a first and second communication device of a first and a second member user (XMD, YMD), respectively,
- initiating a connection between the respective communication device of the respective member user and the securing entity server (VMS) should an input of each member identification and member password be successful,
- sending a request from the first member user of the first communication device (XMD) to the second member user of the second communication device (YMD), the request comprising an indication of the non-identifying personal data of the second member user that the first member user wishes to confirm,
- sending a decision, the decision being selected from a group consisting of accepting totally the request, accepting partially the request and refusing the request, from the second member user of the second communication device (YMD) to the securing entity server (VMS), and
- transmitting the decision of the second member user together with the data he has accepted to transfer from the securing entity server (VMS) to the first member user (XMD).

15. A method of conducting a communication according to any one of the claims 1 to 12 in a qualification verification application over a communication network, wherein the method comprises:
- initiating a connection between the member user (MD) communication device and the securing entity server (VMS) should an input of the member identification and member password be successful,
- connecting the member user communication device (MD) to a website of a partner commercial entity offering adult restricted services (PAWS) and inviting the member user communication device (MD) to type his securing entity public identifier (PID),
- requesting a qualification of the member user personal data from the website of the partner commercial entity offering adult restricted services (PAWS) to the securing entity server (VMS) via a packet server,
- requesting authorization of the member user (MD) to transmit the non-identifying parts of his personal data related to his qualification from the securing entity server (VMS) to the website of the partner commercial entity offering adult restricted services (PAWS) via the packet server,
- transferring the qualification should a positive acceptance of the member user (MD) occur, and
- informing the member user (MD) about the authorization to access to the service restricted to adults offered by the partner commercial entity.

16. A method of conducting a communication according to any one of the claims 1 to 12 in a payment application over a communication network, wherein the method comprises:
- connecting the member user communication device (MD) to a website of a partner commercial website (PCWS) offering an online service upon payment of a transaction amount,
- inviting the member user communication device (MD) to type his securing entity public identifier (PID),
- sending a first request asking for the authorization of the member user (MD) to pay through a securing entity payment service from the partner commercial website (PCWS) to the securing entity server (VMS) via a packet server (VPS),
- transmitting a second request asking for payment acceptation from the partner commercial website (VMPWS) to the securing entity bank server (VPBS) via a payment packet server should a positive acceptance of the first authorization request by the member user (MD) via the securing entity (VM) server occur,
- transmitting a third request asking for authorization to send credit card information of the member user (MD) from the trusted third party server (TTPS) to the securing entity bank server (VPBS) via the packet server (VPS) should a positive acceptance of the second authorization request by the member user (MD) via the securing entity server (VMS) occur,
- dynamically reconstituting the credit card information of the member user (MD) by the trusted third party server (TTPS) based on data split in at least the trusted third party databases (TTPDB) should a positive acceptance of the third authorization request by the member user (MD) via the securing entity server (VMS) occur,
- sending the credit card information from the trusted third party server (TTPS) to the securing entity bank (VPB) via the packet server (VPS),
- transmitting an acceptation of payment from the securing entity bank server (VPBS) to the partner commercial website (PCWS),
- transferring (BB1) the transaction amount from the securing entity bank server (VPBS) to the bank of the partner commercial website (PCWS), and
- transferring (BB2) the transaction amount from the member user's bank server (VMBS) to the securing entity bank server (VPBS).

17. A method of conducting a communication according to any one of the claims 1 to 12 in a survey application over a communication network, wherein the method comprises:
- sending a request for a survey from a survey organization server (SOS) to the securing entity server (VMS) via a packet server (VPS), the request indicating member users' profiles and a number of member user, the member users' profile being only based on non-identifying personal data,
- sending a feasibility confirmation from the securing entity server (VMS) to the survey organization server (SOS),
- creating and sending a questionnaire from the survey organization server (SOS) to the securing entity server (VMS),
- inviting selected communication device member users to participate to the survey, the invitation being initiated when a member user (MD) establishes a connection with the securing entity server (VMS),
- submitting the questionnaire to the member user (MD) upon acceptation to participate to the survey by the member user (MD), and repeating submission until a sample of member user in conformity with the request made by the partner survey organization is achieved, and
- transmitting survey results from the securing entity server (VMS) to the partner survey organization (SOS).

18. A system of conducting a communication over a communication network between a communication device of a member user (MD), a trusted third party (TTP) entity and a securing entity (VM), the system being **characterized in that**:
- the communication device of the member user (MD) comprises a member user software for accessing to services offered by the securing entity server (VMS),
- the trusted third party (TTP) entity comprises a trusted third party server (TTPS), at least one trusted third party database (TTPDB), the trusted third party entity server comprising a trusted third party software to administrate personal data belonging to the member user (MD) sorted according to categories comprising identifying data, non-identifying data and semi-identifying data, non-identifying data and semi-identifying data being correlated to identifying data by a sworn person of the trusted third party entity (TTP), only data selected from a group consisting of non-identifying data and semi-identifying data being requestable by any client entity (YMD, PAWS, PCWS, SOS) during a communication, and to electronically store the semi-identifying data in the database, the identifying data being archived in an office of the trusted third party (TTPO) entity and the semi-identifying data being electronically stored in the trusted third party entity database (TTPDB), and
- the securing entity (VM) comprises a securing entity server (VMS) and a securing entity database (VMDB), the securing entity server comprising a securing entity software to register the user of the communication device as a member user (MD) of the communication device before the securing entity (VM), to electronically store non-identifying data in the securing entity database (VMDB), and to authenticate personal data belonging to the member user (MD) via the trusted third party entity (TTP), and to respond to a request for data selected from the group consisting of non-identifying data and semi-identifying data made by the client entity to the securing entity (VM) under an authorization given by the member user (MD).

19. A system of conducting a communication according to claim 18, wherein the client entity is selected from a group consisting of a bank server, a commercial server, and other member user of a communication device.

20. A system of conducting a communication according to claim 19, wherein a server selected from a group consisting of a bank server and a commercial server is coupled to at least one of the securing entity server (VMS) and the trusted third party server (TTPS) through a packet server (VPS), the server selected from the group consisting of the bank server and the commercial server comprising a first interface software for controlling connection and routing requests and messages between the server selected from the group consisting of the bank server and the commercial server and the at least one of the securing entity server (VMS) and the trusted third party server (TTPS) through the packet server (VPS).

21. A system of conducting a communication according to claim 19 or 20, wherein the bank server is coupled to the commercial server through another packet server, at least one of the bank server and the commercial server comprising a second interface module for controlling connection and routing requests and messages between the bank server and the commercial server through the packet server.

22. A computer program product for a system of conducting a communication over a communication network, the system comprising a communication device of a user (MD), a trusted third party entity server (TTPS), a securing entity server (VMS) and a client entity (YMD, PAWS, PCWS, SOS) that are connectable to each other over the communication network, the computer program product comprising a set of instructions that, when loaded into a program memory of and run by the communication device of the user (MD), the trusted third party entity server (TTPS), the securing entity server (VMS) and the client entity (YMD, PAWS, PCWS, SOS), causes the system to carry out the steps of:
- receiving, from a securing entity (VM), registration information of a user (MD) of a communication device, the registration information being for the user to become a member user (MD), the registration information including personal data authenticated by the securing entity (VM) through the trusted third party entity (TTP), and
- sorting the personal data of the member user (MD) according to categories comprising identifying data, non-identifying data and semi-identifying data, non-identifying data and semi-identifying data being correlated to identifying data by a sworn person of the trusted third party entity (TTP), only at least one of non-identifying data and semi-identifying data being requestable by any client entity during a least one of a transaction and a communication, identifying data being archived in an office of a trusted third party (TTPO) entity, and
- electronically storing semi-identifying data in a trusted third party entity database (TTPDB), and non-identifying data in a securing entity database (VMDB).

23. The computer program product according to claim 22, wherein the set of instructions further causes the system to carry out the steps of:
- responding to a request for at least one of non-identifying data and semi-identifying data made by the client entity (YMD, PAWS, PCWS, SOS) to the securing entity (VM), wherein responding to the request is subject to an authorization given by the member user (MD).
